# EUROPEAN PATENT SPECIFICATION

(11) **EP 3 689 476 B1**
(45) Date of publication and mention of the grant of the patent: **02.10.2024**
(21) Application number: 18860828.5
(22) Date of filing: 09.08.2018
(51) Int. Cl.: B05D 1/36, B05D 7/24, C09D 133/00, C09D 167/00, C09D 167/02, C09D 175/04, C08G 18/28, C08G 18/32, C08G 18/42, C08G 18/62, C08G 18/73, C08G 18/79, C08G 18/80, C09D 175/06

(54) **METHOD FOR FORMING MULTILAYER COATING FILM**
VERFAHREN ZUR AUSBILDUNG EINES MEHRSCHICHTIGEN BESCHICHTUNGSFILMS
PROCÉDÉ DE FORMATION D'UN FILM DE REVÊTEMENT MULTICOUCHE

(30) Priority: 26.09.2017 JP 2017184366
(43) Date of publication of application: 05.08.2020
(73) Proprietor: Kansai Paint Co., Ltd., Amagasaki-shi, Hyogo 661-8555 (JP)
(72) Inventor: IMANAKA, Kenji, Hiratsuka-shi Kanagawa 254-8562 (JP); KITAGAWA, Hiroshi, Hiratsuka-shi Kanagawa 254-8562 (JP)
(74) Representative: Cohausz & Florack
(86) International application number: PCT/JP2018/029958
(87) International publication number: WO 2019/064958

(56) References cited:
- WO-A1-2012/137864
- WO-A1-2014/054593
- JP-A- 2016 155 945
- US-A1- 2014 004 365

## Description

### FIELD

The present invention relates to a multilayer coating film-forming method that allows formation of a coated film with excellent low-temperature curing properties, and excellent hardness and finished outer appearance.

### BACKGROUND

A widely employed method for coating of automobiles is a method of forming a multilayer coating film by a 3-coat, 2-bake (3C2B) system in which an electrodeposition coating is formed on an article to be coated, after which the procedure of intercoat material application -> bake curing -> aqueous base coating material application -> preheating -> clear coating material application -> bake curing is carried out, but in recent years from the viewpoint of achieving energy savings, it has also been attempted to employ 3-coat, 1-bake (3C1B) systems that eliminate the bake curing step following application of the intercoat material, wherein electrodeposition coating is carried out on an article to be coated, and then the procedure of aqueous intercoat material application -> preheating -> aqueous base coating material application -> preheating -> clear coating material application -> bake curing is carried out.

In such a 3C1B system, however, layer mixing tends to take place between the intercoating film and base coating film, resulting in problems such as reduced smoothness or sharpness of the obtained coating film, or reduced chipping resistance or reduced water resistance, which is attributed to changes in the curing balance as the curing agent migrates between the coated films.

In PTL 1, for example, in a multilayer coating film application step using a 3C1B system, it is proposed to use, as an aqueous first pigmented coating material, a coating material comprising a polyester resin (X) that includes a benzene ring and a cyclohexane ring in the molecule in specific contents, and at least one curing agent (Y) selected from the group consisting of isocyanate group-containing compounds (a), oxazoline group-containing compounds (b), carbodiimide group-containing compounds (c), hydrazide group-containing compounds (d) and semicarbazide group-containing compounds (e), to form a multilayer coating film having excellent smoothness, sharpness, chipping resistance and water resistance. PTL 2 proposes, in a 3-coat, 1-bake system wherein an aqueous intercoat material, an aqueous base coating material and a clear coating material are coated in that order onto an article to be coated and the resulting three-layer multilayer coating film is simultaneously heat cured, a multilayer coating film-forming method in which a base resin (A), a curing agent (B) and a diester compound (C) are added as an aqueous intercoat material, the curing agent (B) being a polyisocyanate compound (B1) and/or a polycarbodiimide compound (B2).

In order to further lower energy and reduce CO₂ it is a goal to carry out industrial curing at lower temperature, and coating techniques are desired that can achieve this goal for coating of automobiles as well.

### [CITATION LIST]

### [PATENT LITERATURE]

[PTL 1] WO2007/126107
[PTL 2] JP 2011-530393 A

### SUMMARY

### [TECHNICAL PROBLEM]

It is an object of the invention to provide a method that allows formation of a multilayer coating film with excellent low-temperature curing properties, and excellent hardness and finished outer appearance.

### [SOLUTION TO PROBLEM]

Specifically, the invention relates to a multilayer coating film-forming method that includes carrying out, in the following order:
(1) a step of applying an aqueous two-component type first pigmented coating material (X) on an article to be coated to form an uncured first pigmented coating film,
(2) a step of applying an aqueous one-component type second pigmented coating material (Y) onto the uncured first pigmented coating film obtained in step (1) to form an uncured second pigmented coating film,
(3) a step of applying a two-component type clear coating material (Z) onto the uncured second pigmented coating film obtained in step (2) to form an uncured clear coating film, and
(4) a step of heating the uncured first pigmented coating film, the uncured second pigmented coating film and the uncured clear coating film formed in steps (1) to (3) to simultaneously cure the coated films, wherein:
   the aqueous one-component type second pigmented coating material (Y) contains a hydroxyl group-containing acrylic resin (Y1), a hydroxyl group-containing polyester resin (Y2) and a blocked polyisocyanate compound and/or melamine resin (Y3),
   the hydroxyl group-containing acrylic resin (Y1) includes a core-shell type water-dispersible hydroxyl group-containing acrylic resin (Y11),
   the core-shell type water-dispersible hydroxyl group-containing acrylic resin (Y11):
      has a core-shell type structure, and
      the content ratios of each of the monomers of the total amount of the monomer components composing the core section and shell section, based on the total mass of the monomer components composing the core section and shell section, are:
         40 to 85 mass% of a polymerizable unsaturated monomer (a-1) with a homopolymer glass transition temperature of no higher than -20°C,
         0.1 to 15 mass% of a hydroxyl group-containing polymerizable unsaturated monomer (a-2),
         0.1 to 10 mass% of a carboxyl group-containing polymerizable unsaturated monomer (a-3) and
      0 to 59.8 mass% of a polymerizable unsaturated monomer (a-4) other than the polymerizable unsaturated monomers (a-1) to (a-3), and
      the hydroxyl group-containing polyester resin (Y2) includes a polyester resin (Y21) having a hydroxyl value of 100 to 200 mgKOH/g and an acid value of 10 to 30 mgKOH/g and
      wherein the aqueous two-component type first pigmented coating material (X) contains a hydroxyl group-containing resin (XI) and a polyisocyanate compound (X2) at 1.1 to 2.0 equivalents of isocyanate groups in the polyisocyanate compound (X2) with respect to 1 equivalent of hydroxyl groups in the hydroxyl group-containing resin (XI).

### [ADVANTAGEOUS EFFECTS OF INVENTION]

According to the method of the invention it is possible to form a multilayer coating film having excellent curability even at a baking temperature of 100°C or below, as well as excellent hardness and finished outer appearance.

### DESCRIPTION OF EMBODIMENTS

Each of the steps in the multilayer coating film-forming method of the invention will now be described in order.

### Step (1)

In the multilayer coating film-forming method of the invention, first an aqueous two-component type first pigmented coating material (X) is applied onto an article to be coated to form an uncured first pigmented coating film.

The article to be coated is not particularly restricted, and it may be one made of a material such as metal or plastic, for example. Metal and/or plastic automobile bodies or their parts, and especially automobile body steel sheets, may be subjected to chemical conversion treatment if necessary in a common manner, and they may be subjected to electrodeposition beforehand as well. A primer may also be applied to a plastic surface as necessary.

The aqueous two-component type first pigmented coating material (X) to be applied onto the article to be coated usually includes a hydroxyl group-containing resin (X1), a polyisocyanate compound (X2) and a pigment (X3).

The hydroxyl group-containing resin (X1) is a resin having at least one hydroxyl group in the molecule. From the viewpoint of water resistance of the coating film to be obtained, the hydroxyl value of the hydroxyl group-containing resin (X1) is preferably about 5 to 300 mgKOH/g, more preferably about 15 to 200 mgKOH/g and even more preferably about 20 to 180 mgKOH/g.

The hydroxyl group-containing resin (X1) may also have an acid group in the molecule. Acid groups include carboxyl, sulfonic acid and phosphoric acid groups, with carboxyl groups being preferred. By neutralizing the acid group with a basic compound it is possible to solubilize or form an aqueous dispersion of the hydroxyl group-containing resin (X1).

When the hydroxyl group-containing resin (X1) has an acid group, the acid value of the hydroxyl group-containing resin (X1) is preferably about 3 to 100 mgKOH/g, more preferably about 5 to 80 mgKOH/g and even more preferably about 10 to 70 mgKOH/g, from the viewpoint of storage stability of the aqueous two-component type first pigmented coating material (X) and water resistance of the obtained coating film. When a hydroxyl group-containing resin (X1) having an acid value of 10 mgKOH/g or lower is used, the hydroxyl group-containing resin (X1) may be mixed with an emulsifying agent, instead of neutralization using a basic compound, and the mixture may be subjected to mechanical shear force for stirring to forcibly disperse the hydroxyl group-containing resin (X1) in water.

Examples for the hydroxyl group-containing resin (X1) include polyester resins, acrylic resins, polyether resins, polycarbonate resins, polyurethane resins, epoxy resins, alkyd resins, and modified forms of these resins. These may be used either alone or in combinations of two or more. From the viewpoint of improving the chipping resistance, the hydroxyl group-containing resin (X1) most preferably includes an acryl-modified polyester resin (X11).

The acryl-modified polyester resin (X11) has a polyester portion composed of a polyester resin as the main chain, which is modified with an acrylic portion composed of an acrylic (co)polymer. When the modification is graft modification, the polyester portion is the trunk polymer and the acrylic portion is the branch polymer, with the acrylic portion bonded to the polyester portion at graft points.

The method for producing the acryl-modified polyester resin (X11) is not particularly restricted, and synthesis may be by a common method. Specifically, it may be a method of polymerizing a mixture of an unsaturated group-containing polyester resin and an unsaturated monomer, or a method based on esterification reaction between a polyester resin and an acrylic resin.

From the viewpoint of coating properties, the ratio of the acrylic portion and the polyester portion of the acryl-modified polyester resin (X11) is such that the acrylic portion is in the range of 5 to 40 mass%, especially 5 to 30 mass% and most especially 5 to 25 mass% and the polyester portion is in the range of 60 to 95 mass%, especially 70 to 95 mass% and most especially 75 to 95 mass%, with respect to the acryl-modified polyester resin (X11) (the total of the acrylic portion and polyester portion).

From the viewpoint of curability and water resistance, the acryl-modified polyester resin (X11) has a hydroxyl value of preferably in the range of 20 to 200 mgKOH/g, especially 30 to 150 mgKOH/g and most especially 30 to 150 mgKOH/g.

The hydroxyl value of the acrylic portion is preferably in the range of 0 to 70 mgKOH/g, especially 0 to 50 mgKOH/g and most especially 0 to 30 mgKOH/g.

The hydroxyl value of the polyester portion is preferably in the range of 20 to 200 mgKOH/g, especially 30 to 150 mgKOH/g and most especially 30 to 120 mgKOH/g.

From the viewpoint of water-dispersibility, the acryl-modified polyester resin (X11) has an acid value preferably in the range of 10 to 100 mgKOH/g, especially 15 to 80 mgKOH/g and most especially 15 to 60 mgKOH/g.

The acid value of the acrylic portion is preferably in the range of 50 to 500 mgKOH/g, especially 80 to 400 mgKOH/g and most especially 100 to 300 mgKOH/g.

The acid value of the polyester portion is preferably in the range of 0 to 20 mgKOH/g, especially 0 to 15 mgKOH/g and most especially 0 to 10 mgKOH/g.

The number-average molecular weight of the acryl-modified polyester resin (X11) is preferably in the range of 1000 to 100,000, especially 2000 to 50,000 and most especially 2000 to 20,000, from the viewpoint of coated film outer appearance, coating properties and chipping resistance.

As used herein, the average molecular weight is the value determined by converting the retention time (retention volume) using gel permeation chromatography (GPC) to polystyrene molecular weight based on the retention time (retention volume) for standard polystyrene of known molecular weight measured under the same conditions. Specifically, it may be measured using "HLC-8120GPC" (trade name of Tosoh Corp.) as the gel permeation chromatograph, using 4 columns, a "TSKgel G4000HXL", "TSKgel G3000HXL", "TSKgel G2500HXL" and "TSKgel G2000HXL" (all trade names of Tosoh Corp.) as the columns, and using a differential refractometer as the detector, under the conditions of mobile phase: tetrahydrofuran, measuring temperature: 40°C, flow rate: 1 mL/min.

The polyisocyanate compound (X2) is a compound with at least two unblocked isocyanate groups in each molecule, and examples include aliphatic polyisocyanates, alicyclic polyisocyanates, aromatic/aliphatic polyisocyanates, aromatic polyisocyanates, and derivatives of these polyisocyanates.

Examples of aliphatic polyisocyanates include aliphatic diisocyanates such as trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate, and 2,6-diisocyanatomethyl caproate; and aliphatic triisocyanates such as lysine ester triisocyanate, 1,4,8-triisocyanatooctane, 1,6,11-triisocyanatoundecane, 1,8-diisocyanato-4-isocyanatomethyloctane, 1,3,6-triisocyanatohexane and 2,5,7-trimethyl-1,8-diisocyanato-5-isocyanatomethyloctane.

Examples of alicyclic polyisocyanates include alicyclic diisocyanates such as 1,3-cyclopentene diisocyanate, 1,4-cyclohexane diisocyanate, 1,3-cyclohexane diisocyanate, 3-isocyanatomethyl-3,5,5-trimethylcyclohexyl isocyanate (common name: isophorone diisocyanate), methyl-2,4-cyclohexane diisocyanate, methyl-2,6-cyclohexane diisocyanate, 1,3- or 1,4-bis(isocyanatomethyl)cyclohexane (common name: hydrogenated xylylene diisocyanate) or mixtures thereof, and norbornane diisocyanate; and alicyclic triisocyanates such as 1,3,5-triisocyanatocyclohexane, 1,3,5-trimethylisocyanatocyclohexane, 2-(3-isocyanatopropyl)-2,5-di(isocyanatomethyl)-bicyclo[2.2.1]heptane, 2-(3-isocyanatopropyl)-2,6-di(isocyanatomethyl)-bicyclo[2.2.1]heptane, 3-(3-isocyanatopropyl)-2,5-di(isocyanatomethyl)-bicyclo[2.2.1]heptane, 5-(2-isocyanatoethyl)-2-isocyanatomethyl-3-(3-isocyanatopropyl)-bicyclo[2.2.1]heptane, 6-(2-isocyanatoethyl)-2-isocyanatomethyl-3-(3-isocyanatopropyl)-bicyclo[2.2.1]heptane, 5-(2-isocyanatoethyl)-2-isocyanatomethyl-2-(3-isocyanatopropyl)-bicyclo[2.2.1]-heptane and 6-(2-isocyanatoethyl)-2-isocyanatomethyl-2-(3-isocyanatopropyl)-bicyclo[2.2.1]heptane.

Examples of aromatic/aliphatic polyisocyanates include aromatic/aliphatic diisocyanates such as 1,3- or 1,4-xylylene diisocyanate or mixtures thereof, ω,ω'-diisocyanato-1,4-diethylbenzene and 1,3- or 1,4-bis(1-isocyanato-1-methylethyl)benzene (common name: tetramethylxylylene diisocyanate) or mixtures thereof; and aromatic/aliphatic triisocyanates such as 1,3,5-triisocyanatomethylbenzene.

Examples of aromatic polyisocyanates include aromatic diisocyanates such as m-phenylene diisocyanate, p-phenylene diisocyanate, 4,4'-diphenyl diisocyanate, 1,5-naphthalene diisocyanate, 2,4'- or 4,4'-diphenylmethane diisocyanate or their mixtures, 2,4- or 2,6-tolylene diisocyanate or their mixtures, 4,4'-toluidine diisocyanate and 4,4'-diphenyl ether diisocyanate; aromatic triisocyanates such as triphenylmethane-4,4',4"-triisocyanate, 1,3,5-triisocyanatobenzene and 2,4,6-triisocyanatotoluene; and aromatic tetraisocyanates such as 4,4'-diphenylmethane-2,2',5,5'-tetraisocyanate.

Examples of derivatives of the aforementioned polyisocyanates include dimers, trimers, biurets, allophanates, urethodiones, urethoimines, isocyanurates and oxadiazinetriones of the aforementioned polyisocyanate compounds, as well as polymethylenepolyphenyl polyisocyanate (crude MDI, polymeric MDI) and crude TDI.

These polyisocyanates and their derivatives may be used alone or in combinations of two or more. Among these polyisocyanates, it is preferred to use aliphatic diisocyanates, alicyclic diisocyanates and derivatives of the foregoing, either alone or in combinations of two or more.

From the viewpoint of smoothness of the obtained coating film, the polyisocyanate compound (X2) used is preferably a water-dispersible polyisocyanate compound. Water-dispersible polyisocyanate compounds may be used without any restrictions so long as they are polyisocyanate compounds that are stably dispersible in aqueous medium, preferred among which are hydrophilicized polyisocyanate compounds (X21), which have been modified to be hydrophilic, and polyisocyanate compounds having water dispersibility, obtained by premixing a polyisocyanate compound (X2) and a surfactant.

Examples of hydrophilicized polyisocyanate compounds (X21) include anionic hydrophilicized polyisocyanate compounds (X211) obtained by reacting the active hydrogen group of an active hydrogen group-containing compound with an anionic group with the isocyanate group of a polyisocyanate compound, and nonionic hydrophilicized polyisocyanate compounds (X212) obtained by reacting a hydrophilic polyether alcohol such as a polyoxyethylene monoalcohol or the like with a polyisocyanate compound, any of which may be used alone or in combinations of two or more.

Active hydrogen group-containing compounds with anionic groups include compounds having carboxyl groups, sulfonate groups, phosphate groups and anionic groups with betaine structure-containing groups, and having groups that are able to react with isocyanate groups, examples of which are compounds with active hydrogen groups such as hydroxyl or amino groups, and such compounds may be reacted with polyisocyanate compounds to impart hydrophilicity to the polyisocyanate compounds. The anionic hydrophilicized polyisocyanate compound (X211) is most preferably one having a sulfonate group.

From the viewpoint of the low-temperature curing property, the aqueous two-component type first pigmented coating material (X) preferably contains the hydroxyl group-containing resin (X1) and the polyisocyanate compound (X2) at 1.1 to 2.0 equivalents, and especially 1.1 to 1.7 equivalents of isocyanate groups in the polyisocyanate compound (X2) with respect to 1 equivalent of hydroxyl groups in the hydroxyl group-containing resin (X1).

Examples for the pigment (X3) include color pigments such as titanium oxide, zinc oxide, carbon black, molybdenum red, Prussian blue, cobalt blue, azo-based pigments, phthalocyanine-based pigments, quinacridone-based pigments, isoindoline-based pigments, threne-based pigments, perylene-based pigments, dioxazine-based pigments and diketopyrrolopyrrole-based pigments; extender pigments such as clay, kaolin, barium sulfate, barium carbonate, calcium carbonate, talc, silica and alumina white; and lustrous pigments such as aluminum (including vapor-deposited aluminum), copper, zinc, brass, nickel, aluminum oxide, mica, titanium oxide- or iron oxide-coated aluminum oxide, titanium oxide- or iron oxide-coated mica, and glass flakes, any of which may be used alone or in combinations of two or more.

The content of the pigment (X3) is generally preferred to be in the range of 1 to 200 parts by mass, preferably 20 to 150 parts by mass and more preferably 50 to 120 parts by mass, based on 100 parts by mass as the total solid content of the hydroxyl group-containing resin (X1) and polyisocyanate compound (X2) in the aqueous two-component type first pigmented coating material (X).

The aqueous two-component type first pigmented coating material (X) may contain, as appropriate and necessary, coating material additives such as melamine resin, in addition to the polyisocyanate compound (X2), which additives may include curing agents, curing catalysts, thickening agents, ultraviolet absorbers, light stabilizers, antifoaming agents, plasticizers, organic solvents, surface control agents and anti-settling agents.

The solid concentration of the aqueous two-component type first pigmented coating material (X) is usually preferred to be 30 to 80 mass%, more preferably 40 to 70 mass% and even more preferably 45 to 60 mass%.

The aqueous two-component type first pigmented coating material (X) is usually preferred to be a two-component type coating material comprising a base compound comprising the hydroxyl group-containing resin (X1) and pigment (X3), and a curing agent comprising the polyisocyanate compound (X2).

The aqueous two-component type first pigmented coating material (X) may be coated onto an article to be coated by a known method such as air spray coating, airless spray coating, rotary atomizing coating or curtain coating, for example, and electrostatic application may also be carried out during the coating. Methods of air spray coating and rotary atomizing coating are preferred among these. The coating amount is usually preferred to be an amount for a cured film thickness of 10 to 50 µm and preferably 10 to 40 µm.

### Step (2)

In the multilayer coating film-forming method of the invention, the uncured first pigmented coating film obtained in step (1) is then coated with the aqueous one-component type second pigmented coating material (Y) to form an uncured second pigmented coating film.

The aqueous one-component type second pigmented coating material (Y) contains a hydroxyl group-containing acrylic resin (Y1), a hydroxyl group-containing polyester resin (Y2) and a blocked polyisocyanate compound and/or melamine resin (Y3).

The hydroxyl group-containing acrylic resin (Y1) includes a core-shell type water-dispersible hydroxyl group-containing acrylic resin (Y11), the core-shell type water-dispersible hydroxyl group-containing acrylic resin (Y11) having a core-shell type structure, wherein the content ratio of each of the monomers with respect to the total amount of the monomer components composing the core section and shell section of the core-shell type structure is 40 to 85 mass% of the polymerizable unsaturated monomer (a-1) that has a homopolymer glass transition temperature of no higher than -20°C, 0.1 to 15 mass% of the hydroxyl group-containing polymerizable unsaturated monomer (a-2), 0.1 to 10 mass% of the carboxyl group-containing polymerizable unsaturated monomer (a-3) and 0 to 59.8 mass% of the polymerizable unsaturated monomer (a-4) other than the polymerizable unsaturated monomers (a-1) to (a-3), based on the total mass of the monomer components composing the core section and shell section.

The polymerizable unsaturated monomer (a-1) with a homopolymer glass transition temperature of no higher than -20°C may be a straight-chain or branched alkyl acrylate of 2 to 18 carbon atoms, with the exclusion of monomers having functional groups, such as hydroxyl group-containing polymerizable unsaturated monomers. Examples of such monomers include ethyl acrylate (homopolymer glass transition temperature (Tg): -22°C), *n*-butyl acrylate (-54°C), isobutyl acrylate (-22°C), n-hexyl acrylate (-57°C), *n*-octyl acrylate (-63°C), 2-ethylhexyl acrylate (-53°C) and lauryl acrylate (-65°C). These monomers may be used alone or in combinations of two or more.

The Tg values for homopolymers of the different monomers are the values listed in Polymer Handbook (Second Edition, J. Brandup, E.H. Immergut, ed.) III - pp.139-179. When the Tg for a homopolymer of a monomer was unknown the static glass transition temperature was used, and it was obtained using a "DSC-220U" differential scanning calorimeter (product of Seiko Instruments, Inc.), for example, by taking a sample into a measuring cup, subjecting it to vacuum suction to completely remove the solvent, and then measuring the change in heat quantity in a range of -20°C to +200°C at a temperature-elevating rate of 3°C/min and recording the static glass transition temperature as the change point of the original baseline at the low-temperature end.

The hydroxyl group-containing polymerizable unsaturated monomer (a-2) can improve the stability of the obtained core-shell type water-dispersible hydroxyl group-containing acrylic resin (Y11) in aqueous media. Examples for the hydroxyl group-containing polymerizable unsaturated monomer (a-2) that may be used include monoesterified products of (meth)acrylic acid and dihydric alcohols of 2 to 8 carbon atoms, such as 2-hydroxyethyl (meth)acrylate, 2-hydroxypropyl (meth)acrylate, 3-hydroxypropyl (meth)acrylate and 4-hydroxybutyl (meth)acrylate, ε-caprolactone-modified forms of the monoesterified products of (meth)acrylic acid and dihydric alcohols of 2 to 8 carbon atoms, N-hydroxymethyl (meth)acrylamide; allyl alcohols, and (meth)acrylates having polyoxyethylene chains with hydroxyl groups at the molecular ends.

The carboxyl group-containing polymerizable unsaturated monomer (a-3) can improve the stability of the obtained core-shell type water-dispersible hydroxyl group-containing acrylic resin (Y11) in aqueous media. Examples for the carboxyl group-containing polymerizable unsaturated monomer (a-3) include (meth)acrylic acid, maleic acid, crotonic acid and β-carboxyethyl acrylate. These monomers may be used alone or in combinations of two or more.

The polymerizable unsaturated monomer (a-4) to be used other than the polymerizable unsaturated monomers (a-1) to (a-3) may be selected as appropriate depending on the properties desired for the water-dispersible hydroxyl group-containing acrylic resin (Y1). Specific examples for the polymerizable unsaturated monomer (a-4) are listed below. These may be used alone or in combinations of two or more.

Examples for the polymerizable unsaturated monomer (a-4) include alkyl or cycloalkyl (meth)acrylates such as methyl (meth)acrylate, ethyl methacrylate, n-propyl methacrylate, isopropyl methacrylate, n-butyl methacrylate, isobutyl methacrylate, tert-butyl (meth)acrylate, hexyl methacrylate, octyl methacrylate, 2-ethylhexyl methacrylate, lauryl methacrylate, cyclohexyl (meth)acrylate, methylcyclohexyl (meth)acrylate, tert-butylcyclohexyl (meth)acrylate, cyclododecyl (meth)acrylate and tricyclodecanyl (meth)acrylate; polymerizable unsaturated compounds with isobornyl groups such as isobornyl (meth)acrylate; polymerizable unsaturated compounds with adamantyl groups such as adamantyl (meth)acrylate; aromatic ring-containing polymerizable unsaturated monomers such as benzyl (meth)acrylate, styrene, α-methylstyrene and vinyltoluene; nitrogen-containing polymerizable unsaturated monomers such as addition products of amine compounds with (meta)acrylonitrile, (meth)acrylamide, methylenebis(meth)acrylamide, ethylenebis(meth)acrylamide, 2-(methacryloyloxy)ethyltrimethylammonium chloride or glycidyl (meth)acrylate; polymerizable unsaturated monomers having at least two polymerizable unsaturated groups in the molecule such as allyl (meth)acrylate and 1,6-hexanediol di(meth)acrylate; epoxy group-containing polymerizable unsaturated monomers such as glycidyl (meth)acrylate, β-methylglycidyl (meth)acrylate, 3,4-epoxycyclohexylmethyl (meth)acrylate, 3,4-epoxycyclohexylethyl (meth)acrylate, 3,4-epoxycyclohexylpropyl (meth)acrylate and allyl glycidyl ether; (meth)acrylates with polyoxyethylene chains having alkoxy groups at the molecular ends; and polymerizable unsaturated monomers with sulfonate groups, which are sodium salts and ammonium salts of 2-acrylamide-2-methylpropanesulfonic acid, 2-sulfoethyl (meth)acrylate, allylsulfonic acid or 4-styrenesulfonic acid. These monomers may be used alone or in combinations of two or more.

The content ratios of the polymerizable unsaturated monomer (a-1) with a homopolymer glass transition temperature of no higher than -20°C, the hydroxyl group-containing polymerizable unsaturated monomer (a-2), the carboxyl group-containing polymerizable unsaturated monomer (a-3) and the polymerizable unsaturated monomer (a-4) other than polymerizable unsaturated monomers (a-1) to (a-3), are preferably in the following ranges based on the total mass of the monomer components, from the viewpoint of smoothness, sharpness and water resistance of the coated film that is formed.

Polymerizable unsaturated monomer (a-1) with a homopolymer glass transition temperature of no higher than -20°C: 40 to 85 mass%, and preferably 45 to 80 mass%,

Hydroxyl group-containing polymerizable unsaturated monomer (a-2): 0.1 to 15 mass%, and preferably 0.5 to 15 mass%,

Carboxyl group-containing polymerizable unsaturated monomer (a-3): 0.1 to 10 mass%, and preferably 0.5 to 5 mass%,

Polymerizable unsaturated monomer (a-4) other than the polymerizable unsaturated monomers (a-1) to (a-3): 0 to 59.8 mass%, and preferably 0 to 54 mass%.

The core-shell type water-dispersible hydroxyl group-containing acrylic resin (Y11) preferably has its core section crosslinked, and contains the polymerizable unsaturated monomer with at least two polymerizable unsaturated groups in the molecule at 0.1 to 10 mass% and preferably 0.1 to 5 mass%, based on the total mass of the monomer component composing the core section.

The core-shell type water-dispersible hydroxyl group-containing acrylic resin (Y11) may have a mean particle diameter in the range of generally about 10 to 1,000 nm and especially about 20 to 500 nm.

The mean particle diameter of the core-shell type water-dispersible hydroxyl group-containing acrylic resin (Y11) referred to throughout the present specification is the value measured using a dynamic light scattering particle size distribution measuring apparatus at 20°C, after dilution with deionized water by a common method. An example of a dynamic light scattering particle size distribution measuring apparatus that may be used is "Submicron Particle Analyzer N5" (trade name of Beckman Coulter, Inc.).

In order to improve the mechanical stability of the particles, the core-shell type water-dispersible hydroxyl group-containing acrylic resin (Y11) preferably has the acidic groups such as carboxyl groups of the water-dispersible acrylic resin neutralized with a neutralizing agent. There are no particular restrictions on the neutralizing agent so long as it can neutralize the acidic groups, and examples include sodium hydroxide, potassium hydroxide, trimethylamine, 2-(dimethylamino)ethanol, 2-amino-2-methyl-1-propanol, triethylamine and ammonia water. These neutralizing agents are preferably used in amounts such that the pH of the aqueous dispersion of the water-dispersible acrylic resin after neutralization is about 6.5 to 9.0.

The proportion of the core section and shell section in the core-shell type water-dispersible hydroxyl group-containing acrylic resin (Y11), in terms of the solid mass ratio, is core section/shell section = ~50/50 to 95/5 and more preferably ~70/30 to 95/5, from the viewpoint of improving the smoothness, sharpness, brightness and water resistance of the obtained coated film.

The core-shell type water-dispersible hydroxyl group-containing acrylic resin (Y11) can usually be obtained by emulsion polymerization of the monomer mixture that is to form the core section to obtain a copolymer emulsion for the core section, and then adding to this emulsion the monomer mixture that is to form the shell section, and further carrying out emulsion polymerization to prepare the copolymer for the shell section. Emulsion polymerization can be carried out by a method known in the prior art, such as emulsion polymerization of the monomer mixture using a polymerization initiator in the presence of a surfactant.

From the viewpoint of coating material storage stability and water resistance of the obtained coating film, the core-shell type water-dispersible hydroxyl group-containing acrylic resin (Y11) obtained in this manner has an acid value of preferably about 0.1 to 100 mgKOH/g and more preferably about 2 to 50 mgKOH/g, and a hydroxyl value of preferably about 0.1 to 100 mgKOH/g and more preferably about 2 to 50 mgKOH/g. From the viewpoint of infiltration of the curing agent component through the upper layer and lower layer films, the glass transition temperature is preferably about -50 to 0°C and more preferably about -30 to -5°C.

The hydroxyl group-containing polyester resin (Y2) is obtained by reacting an acid component and alcohol component, and it includes a polyester resin (Y21) having a hydroxyl value of 100 to 200 mgKOH/g and preferably 105 to 195 mgKOH/g and an acid value of 10 to 30 mgKOH/g and preferably 10 to 25 mgKOH/g.

From the viewpoint of ensuring hardness of the coated film, the hydroxyl group-containing polyester resin (Y21) preferably includes an alicyclic polybasic carboxylic acid (this includes acid anhydrides) (b-1), as the acid component of the starting material, at a content of at least 30 mol% based on the total amount of the acid component, and includes a diol (b-2) having a branched alkylene group and at least 5 carbon atoms, as the alcohol component of the starting material, at a content of at least 40 mol% based on the total amount of the alcohol component.

The alicyclic polybasic carboxylic acid (including acid anhydrides) (b-1) includes compounds having at least one alicyclic structure (preferably a 4- to 6-membered ring structure) and at least two carboxyl groups in each molecule, as well as acid anhydrides of such compounds, with specific examples being 1,2-cyclohexanedicarboxylic acid, 1,2-cyclohexanedicarboxylic anhydride, 1,3-cyclohexanedicarboxylic acid, 1,4-cyclohexanedicarboxylic acid, 4-cyclohexene-1,2-dicarboxylic acid, 4-cyclohexene-1,2-dicarboxylic anhydride, 3-methyl-1,2-cyclohexanedicarboxylic acid, 3-methyl-1,2-cyclohexanedicarboxylic anhydride, 4-methyl-1,2-cyclohexanedicarboxylic acid, 4-methyl-1,2-cyclohexanedicarboxylic anhydride, 1,2,4-cyclohexanetricarboxylic acid, 1,2,4-cyclohexanetricarboxylic acid 1,2-anhydride and chlorendic acid, among which 1,2-cyclohexanedicarboxylic acid and 1,2-cyclohexanedicarboxylic anhydride are preferred for use. These alicyclic polybasic carboxylic acids (including acid anhydrides) (b-1) may be used alone or in combinations of two or more.

Other acid components that may be used in combination with the aforementioned alicyclic polybasic carboxylic acids (including their acid anhydrides) (b-1) are not particularly restricted, and any ones commonly used for production of polyester resins may be similarly employed, with examples thereof including aliphatic polybasic carboxylic acids (including their acid anhydrides) such as succinic acid, glutaric acid, adipic acid, pimelic acid, suberic acid, azelaic acid, sebacic acid, undecanedioic acid, dodecanedioic acid, brassylic acid, octadecanedioic acid, citric acid, maleic acid, fumaric acid, itaconic acid and their anhydrides; aromatic polybasic carboxylic acids (including their acid anhydrides) such as phthalic acid, phthalic anhydride, isophthalic acid, terephthalic acid, trimellitic acid, trimellitic anhydride, pyromellitic acid, pyromellitic anhydride and naphthalenedicarboxylic acid; fatty acids such as coconut fatty acid, cottonseed oil fatty acid, hempseed oil fatty acid, rice bran oil fatty acid, fish oil fatty acid, tall oil fatty acid, soybean oil fatty acid, linseed oil fatty acid, China wood oil fatty acid, rapeseed oil fatty acid, castor oil fatty acid, dehydrated castor oil fatty acid and safflower oil fatty acid; and benzoic acid, 4-*tert*-butylbenzoic acid, and the like.

The aforementioned alcohol component used may be a polyhydric alcohol having at least two hydroxyl groups in each molecule, with specific examples including dihydric alcohols such as ethylene glycol, propylene glycol, diethylene glycol, trimethylene glycol, triethylene glycol, tetraethylene glycol, dipropylene glycol, 1,4-butanediol, 1,3-butanediol, 2,3-butanediol, 1,2-butanediol, 3-methyl-1,2-butanediol, 2,2-diethyl-1,3-propanediol, 2-butyl-2-ethyl-1,3-propanediol, 1,2-pentanediol, 1,5-pentanediol, 1,4-pentanediol, 2,4-pentanediol, 2,3-dimethyltrimethylene glycol, tetramethylene glycol, 3-methyl-4,3-pentanediol, 3-methyl-1,5-pentanediol, 2,2,4-trimethyl-1,3-pentanediol, 1,6-hexanediol, 1,5-hexanediol, 1,4-hexanediol, 2,5-hexanediol, neopentyl glycol and hydroxypivalic acid neopentyl glycol ester; polylactonediols having lactones such as ε-caprolactone added to these dihydric alcohols; ester diols such as bis(hydroxyethyl) terephthalate; polyether diols such as bisphenol A alkylene oxide addition products, polyethylene glycol, polypropylene glycol and polybutylene glycol; trihydric and greater alcohols such as glycerin, trimethylolpropane, trimethylolethane, diglycerin, triglycerin, 1,2,6-hexanetriol, pentaerythritol, dipentaerythritol, sorbitol and mannitol; polylactone polyols having lactones such as ε-caprolactone added to these trihydric and greater alcohols; and alicyclic polyhydric alcohols such as 1,3-cyclohexanedimethanol, 1,4-cyclohexanedimethanol, tricyclodecanedimethanol, hydrogenated bisphenol A and hydrogenated bisphenol F.

Among the dihydric alcohols mentioned above, the diol (b-2) having a branched alkylene group and at least 5 carbon atoms may be 3-methyl-1,2-butanediol, 2,2-diethyl-1,3-propanediol, 2-butyl-2-ethyl-1,3-propanediol, 2,3-dimethyltrimethylene glycol, 3-methyl-4,3-pentanediol, 3-methyl-1,5-pentanediol, 2,2,4-trimethyl-1,3-pentanediol or neopentyl glycol.

The method for synthesizing the hydroxyl group-containing polyester resin (Y21) is not particularly restricted, and it may be conducted by a common method. For example, it may be synthesized by heating the acid component and alcohol component under a nitrogen stream for about 5 to 10 hours at about 150°C to about 250°C for esterification reaction between the hydroxyl groups and carboxyl groups.

During esterification reaction between the acid component and alcohol component, they may be either added all at once or added over several times. Alternatively, the hydroxyl group-containing polyester resin may be synthesized first, and then reacted with the acid anhydride to form a half-ester.

From the viewpoint of smoothness and film performance of the obtained coating film, the hydroxyl group-containing polyester resin (Y21) is generally preferred to have a number-average molecular weight in the range of 300 to 50,000, especially 500 to 20,000 and most especially 800 to 10,000. The hydroxyl group-containing polyester resin (Y21) is also preferred neutralized with a neutralizing agent to facilitate its mixing and dispersion in water.

The blocked polyisocyanate compound and/or melamine resin (Y3) used may be either or both a blocked polyisocyanate compound and a melamine resin.

A blocked polyisocyanate compound is a polyisocyanate compound having at least two isocyanate groups in each molecule, with the isocyanate groups blocked with a blocking agent.

Examples of such polyisocyanate compounds include those listed above for the polyisocyanate compound (X2), such as aliphatic polyisocyanates, alicyclic polyisocyanates, aromatic aliphatic polyisocyanates, aromatic polyisocyanates, and derivatives of these polyisocyanates.

The blocking agent is a compound that blocks free isocyanate groups, and examples include phenol-based compounds, lactam-based compounds, ether-based compounds, glycolic acid esters, lactic acid esters, alcohol-based compounds, oxime-based compounds, active methylene-based compounds, mercaptane-based compounds, amide-based compounds, imide-based compounds, amine-based compounds, urea-based compounds, carbamic acid ester-based compounds, imine-based compounds and azole-based compounds.

A particularly preferred blocked polyisocyanate compound is an active methylene blocked polyisocyanate compound (Y31) having hydrophilic groups. As the active methylene blocked polyisocyanate compound having hydrophilic groups it is suitable to use a blocked polyisocyanate compound (Y311) obtained by reacting an active hydrogen-containing compound having a hydrophilic group with some of the isocyanate groups in the polyisocyanate compound to introduce hydrophilic groups, and then further reacting an active methylene compound with isocyanate groups in the polyisocyanate compound, and it is also suitable to use one obtained by further reacting the blocked polyisocyanate compound (Y311) with a secondary alcohol of 6 or more carbon atoms.

The active hydrogen-containing compound having a hydrophilic group may be an active hydrogen-containing compound with a nonionic hydrophilic group, an active hydrogen-containing compound with an anionic hydrophilic group, an active hydrogen-containing compound with a cationic hydrophilic group, or the like, and any one or a combination of two or more of these may be used. It is preferred to use an active hydrogen-containing compound with a nonionic hydrophilic group, to minimize inhibition of the reaction of blocking the isocyanate groups in the polyisocyanate compound with the active methylene compound.

Examples of active hydrogen-containing compounds with nonionic hydrophilic groups that are suitable for use include active hydrogen-containing compounds with polyoxyalkylene groups. Examples of polyoxyalkylene groups include polyoxyethylene groups and polyoxypropylene groups, which may be used alone or in combinations of two or more. Of these, active hydrogen-containing compounds with polyoxyethylene groups are preferred from the viewpoint of storage stability of the coating material.

Also, the active hydrogen-containing compound with a nonionic hydrophilic group preferably has a number-average molecular weight in the range of 200 to 2,000, from the viewpoint of the storage stability of the coating material and the water resistance of the multilayer coating film that is to be formed. The lower limit for the number-average molecular weight is more preferably 300 and even more preferably 400 from the viewpoint of the storage stability of the coating material. The upper limit is preferably 1,500 and more preferably 1,200, from the viewpoint of the water resistance of the multilayer coating film that is to be formed.

Preferred examples of active hydrogen-containing compounds with nonionic hydrophilic groups are polyethyleneglycol monomethyl ether, polyethyleneglycol monoethyl ether and polyethylene glycol, with polyethyleneglycol monomethyl ether being more preferred. Examples of commercial polyethyleneglycol monomethyl ether products include "UNIOX M-400", "UNIOX M-550", "UNIOX M-1000" and "UNIOX M-2000" by NOF Corp. Examples of commercial polyethylene glycol products include "PEG#200", "PEG#300", "PEG#400", "PEG#600", "PEG#1000", "PEG#1500", "PEG#1540" and "PEG#2000" by NOF Corp.

Reaction between some of the isocyanate groups in the polyisocyanate compound and the active hydrogen-containing compound having a hydrophilic group may be carried out at 0 to 150°C, and a solvent may also be used. In this case, the solvent is preferably an aprotic solvent, with solvents such as esters, ethers, N-alkylamides and ketones being especially preferred. The active hydrogen-containing compound that has not reacted with isocyanate groups in the polyisocyanate compound may be removed after completion of the reaction. The reaction proportion of the polyisocyanate compound and the active hydrogen-containing compound having a hydrophilic group is preferably in the range of 0.03 to 0.6 mol and more preferably in the range of 0.04 to 0.4 mol, as the number of moles of active hydrogens in the active hydrogen-containing compound with respect to 1 mol of isocyanate groups in the polyisocyanate compound, from the viewpoint of storage stability and curability of the coating material, and smoothness, sharpness and adhesion of the multilayer coating film that is to be formed.

Examples of active methylene compounds include malonic acid diesters such as dimethyl malonate, diethyl malonate, di-n-propyl malonate, diisopropyl malonate, di-n-butyl malonate, diisobutyl malonate, di-sec-butyl malonate, di-t-butyl malonate, di-n-pentyl malonate, di-n-hexyl malonate, di(2-ethylhexyl) malonate, methyl isopropyl malonate, ethyl isopropyl malonate, methyl n-butyl malonate, ethyl n-butyl malonate, methyl isobutyl malonate, ethyl isobutyl malonate, methyl sec-butyl malonate, ethyl sec-butyl malonate, diphenyl malonate and dibenzyl malonate, acetoacetic acid esters such as methyl acetoacetate, ethyl acetoacetate, *n*-propyl acetoacetate, isopropyl acetoacetate, *n*-butyl acetoacetate, isobutyl acetoacetate, *sec*-butyl acetoacetate, *t*-butyl acetoacetate, *n*-pentyl acetoacetate, *n*-hexyl acetoacetate, 2-ethylhexyl acetoacetate, phenyl acetoacetate and benzyl acetoacetate, and isobutyrylacetic acid esters such as methyl isobutyrylacetate, ethyl isobutyrylacetate, *n*-propyl isobutyrylacetate, isopropyl isobutyrylacetate, *n*-butyl isobutyrylacetate, isobutyl isobutyrylacetate, *sec*-butyl isobutyrylacetate, *t*-butyl isobutyrylacetate, *n*-pentyl isobutyrylacetate, *n*-hexyl isobutyrylacetate, 2-ethylhexyl isobutyrylacetate, phenyl isobutyrylacetate and benzyl isobutyrylacetate, any of which may be used alone or in combinations of two or more.

From the viewpoint of the smoothness and sharpness of the multilayer coating film that is to be formed, the active methylene compound is preferably at least one type of compound selected from the group consisting of dimethyl malonate, diethyl malonate, diisopropyl malonate, methyl acetoacetate, ethyl acetoacetate, methyl isobutyrylacetate and ethyl isobutyrylacetate, among which diisopropyl malonate is more preferred from the viewpoint of smoothness and sharpness of the multilayer coating film that is to be formed, reactivity of the obtained blocked polyisocyanate compound, and storage stability of the coating material.

The blocking reaction of isocyanate groups by the active methylene compound may employ a reaction catalyst if necessary. Acceptable examples for the reaction catalyst include basic compounds such as metal hydroxides, metal alkoxides, metal carboxylates, metal acetylacetonates, onium salt hydroxides, onium carboxylates, metal salts of active methylene compounds, onium salts of active methylene compounds, aminosilanes, amines, phosphines, and the like. Preferred onium salts are ammonium salts, phosphonium salts and sulfonium salts. The amount of reaction catalyst used is, for most cases, preferably in the range of 10 to 10,000 ppm and more preferably in the range of 20 to 5,000 ppm, based on the total solid mass of the polyisocyanate compound and the active methylene compound.

The blocking reaction of isocyanate groups by the active methylene compound may be conducted at 0°C to 150°C, and a solvent may also be used. In this case, the solvent is preferably an aprotic solvent, with solvents such as esters, ethers, N-alkylamides and ketones being especially preferred. If the reaction has proceeded as designed, an acid component may be added to neutralize the basic compound used as the catalyst, and halt the reaction.

There are no particular restrictions on the amount of active methylene compound used for the blocking reaction of the isocyanate groups by the active methylene compound, but 0.1 to 3 mol and preferably 0.2 to 2 mol may be used with respect to 1 mol of isocyanate groups in the polyisocyanate compound. Also, the active methylene compound that has not reacted with isocyanate groups in the polyisocyanate compound may be removed after completion of the blocking reaction.

The active methylene compound is reacted with the isocyanate groups in the polyisocyanate compound as described above to obtain the blocked polyisocyanate compound (Y311). A secondary alcohol of 6 or more carbon atoms may also be reacted with the blocked polyisocyanate compound (Y311).

Examples of secondary alcohols of 6 or more carbon atoms include 4-methyl-2-pentanol, 5-methyl-2-hexanol, 6-methyl-2-heptanol and 7-methyl-2-octanol, which may be used alone or in combinations of two or more.

For reaction between the blocked polyisocyanate compound (Y311) and the secondary alcohol, a method is preferred in which all or a portion of the alcohol derived from the active methylene in the blocked polyisocyanate compound (Y311) is distilled out of the system by heating and reduced pressure, thereby accelerating the reaction to obtain the product.

Specifically, as the production method, some or all of the alcohol may be removed by conducting 5 minutes to 20 hours and preferably 10 minutes to 10 hours at a temperature of 20°C to 150°C and preferably 75°C to 95°C, under reduced pressure if necessary.

The mixing proportion of the blocked polyisocyanate compound (Y311) and the secondary alcohol is such that the secondary alcohol is preferably in the range of 5 to 500 parts by mass and more preferably in the range of 10 to 200 parts by mass, based on 100 parts by mass as the solid content of the blocked polyisocyanate compound (Y311).

The number-average molecular weight of the active methylene blocked polyisocyanate compound (Y31) having hydrophilic groups, which is obtained as described above, is in the range of 600 to 30,000 and preferably in the range of 900 to 10,000, from the viewpoint of compatibility with the other coating material components, and the smoothness, sharpness, water resistance and chipping resistance of the multilayer coating film that is to be formed.

Examples for the melamine resin include methylolmelamines such as dimethylolmelamine, trimethylolmelamine, tetramethylolmelamine, pentamethylolmelamine and hexamethylolmelamine; alkyl etherified products of methylolmelamines and alcohols; and etherified products of methylolmelamine condensates and alcohols. Examples of alcohols include alkanols of 1 to 10 carbon atoms such as methyl alcohol, ethyl alcohol, propyl alcohol, isopropyl alcohol, butyl alcohol, isobutyl alcohol and 2-ethylhexyl alcohol.

Examples of melamine resins that may be suitably used include melamine resins having an average of at least 3 methyl etherified methylol groups per triazine nucleus, and hydrophilic imino group-containing alkyl etherified melamine resins with weight-average molecular weights of about 500 to 1000. When a melamine resin is used as the curing agent, the curing catalyst used may be a sulfonic acid such as para-toluenesulfonic acid, dodecylbenzenesulfonic acid or dinonylnaphthalenesulfonic acid; a neutral salt of the sulfonic acid and an amine; or a neutral salt of a phosphoric acid ester compound and an amine.

The mixing proportion of the hydroxyl group-containing acrylic resin (Y1), the hydroxyl group-containing polyester resin (Y2) and the blocked polyisocyanate compound and/or melamine resin (Y3) in the aqueous one-component type second pigmented coating material (Y) may be in the following ranges based on 100 parts by mass as their total.

Hydroxyl group-containing acrylic resin (Y1): 20 to 70 parts by mass, and preferably 25 to 65 parts by mass,

Hydroxyl group-containing polyester resin (Y2): 20 to 70 parts by mass, and preferably 25 to 65 parts by mass,

Blocked polyisocyanate compound and/or melamine resin (Y3): 10 to 30 parts by mass, and preferably 10 to 25 parts by mass.

The aqueous one-component type second pigmented coating material (Y) may also contain, in addition to (Y1) to (Y3), a modifier resin such as a water-soluble or water-dispersible acrylic resin, polyurethane resin or alkyd resin.

The aqueous one-component type second pigmented coating material (Y) may further contain a pigment such as a color pigment, extender pigment or lustrous pigment. Among these, it preferably contains a color pigment and/or a lustrous pigment as at least one type of pigment.

Examples of color pigments include titanium oxide, zinc oxide, carbon black, molybdenum red, Prussian blue, cobalt blue, azo-based pigments, phthalocyanine-based pigments, quinacridone-based pigments, isoindoline-based pigments, threne-based pigments, perylene-based pigments, dioxazine-based pigments, diketopyrrolopyrrole-based pigments and the like, which were mentioned above in explaining the aqueous two-component type first pigmented coating material (X).

When the aqueous one-component type second pigmented coating material (Y) contains a color pigment, the content of the color pigment is preferred to be in the range of generally 1 to 150 parts by mass, especially 3 to 130 parts by mass and most especially 5 to 110 parts by mass, based on 100 parts by mass of the solid resin content in the aqueous one-component type second pigmented coating material (Y).

Examples of lustrous pigments include aluminum (including vapor deposited aluminum), copper, zinc, brass, nickel, aluminum oxide, mica, aluminum oxide covered by titanium oxide or iron oxide, mica covered by titanium oxide or iron oxide, glass flakes and hologram pigments. Preferred for use among these are aluminum, aluminum oxide, mica, aluminum oxide covered by titanium oxide or iron oxide and mica covered by titanium oxide or iron oxide. These lustrous pigments may be used alone or in combinations of two or more.

When the aqueous one-component type second pigmented coating material (Y) contains a lustrous pigment, the content of the lustrous pigment is preferred to be in the range of generally 1 to 50 parts by mass, especially 2 to 30 parts by mass and most especially 3 to 20 parts by mass, based on 100 parts by mass of the solid resin content in the aqueous one-component type second pigmented coating material (Y).

The aqueous one-component type second pigmented coating material (Y) used may further contain, if necessary, common coating material additives such as organic solvents, curing catalysts, thickening agents, ultraviolet absorbers, light stabilizers, antifoaming agents, plasticizers, surface control agents, anti-settling agents and the like, either alone or in combinations of two or more.

The aqueous one-component type second pigmented coating material (Y) may be coated by a known method such as air spraying, airless spraying, rotary atomizing coating or the like, and electrostatic application may be carried out during the coating. The coated film thickness may usually be in the range of 5 to 50 µm, preferably 5 to 40 µm and more preferably 5 to 30 µm, as the cured film thickness.

### Step (3):

In the multilayer coating film-forming method of the invention, the uncured second pigmented coating film obtained in step (2) above is further coated with the two-component type clear coating material (Z) to form an uncured clear coating film.

From the viewpoint of preventing coating defects such as pinhole popping, the second pigmented coating film is preferably subjected to preheating, air blowing or the like under heating conditions in which the coating film substantially does not cure, before application of the two-component type clear coating material (Z). The temperature for preheating is usually preferred to be in the range of about 40°C to about 80°C, especially about 50°C to about 80°C and most especially about 60°C to about 80°C. The preheating time is usually preferred to be about 30 seconds to 15 minutes, especially about 1 to 10 minutes and most preferably about 2 to 5 minutes. Air blowing may be carried out by blasting the coated surface of the coated article with heated air at a temperature of usually ordinary temperature or 25°C to about 80°C, for a period of about 30 seconds to 15 minutes.

Before applying the two-component type clear coating material (Z), the second pigmented coating film is preferably subjected to preheating, air blowing or the like as necessary to adjust the coated film solid content to a range of usually 70 to 100 mass%, especially 80 to 100 mass% and most especially 90 to 100 mass%.

The two-component type clear coating material (Z) contains a hydroxyl group-containing acrylic resin (Z1) and a polyisocyanate compound (Z2).

The hydroxyl group-containing acrylic resin (Z1) can be produced by copolymerizing a hydroxyl group-containing unsaturated monomer and another unsaturated monomer that is copolymerizable with the monomer. A hydroxyl group-containing unsaturated monomer is a compound having at least one hydroxyl group and at least one polymerizable unsaturated bond in the molecule, and examples thereof include monoesterified products of (meth)acrylic acid and dihydric alcohols of 2 to 8 carbon atoms, such as 2-hydroxyethyl (meth)acrylate, 2-hydroxypropyl (meth)acrylate, 3-hydroxypropyl (meth)acrylate and 4-hydroxybutyl (meth)acrylate; ε-caprolactone-modified forms of the monoesterified products of (meth)acrylic acid and dihydric alcohols of 2 to 8 carbon atoms; allyl alcohols; and (meth)acrylates having polyoxyethylene chains with hydroxyl groups at the molecular ends.

Examples of other polymerizable unsaturated monomers that are copolymerizable with the hydroxyl group-containing unsaturated monomer include alkyl or cycloalkyl (meth)acrylates such as methyl (meth)acrylate, ethyl (meth)acrylate, n-propyl (meth)acrylate, i-propyl (meth)acrylate, n-butyl (meth)acrylate, i-butyl (meth)acrylate, tert-butyl (meth)acrylate, n-hexyl (meth)acrylate, octyl (meth)acrylate, 2-ethylhexyl (meth)acrylate, nonyl (meth)acrylate, lauryl (meth)acrylate, tridecyl (meth)acrylate, stearyl (meth)acrylate, "Isostearyl Acrylate" (trade name of Osaka Organic Chemical Industry, Ltd.), cyclohexyl (meth)acrylate, methylcyclohexyl (meth)acrylate, t-butylcyclohexyl (meth)acrylate and cyclododecyl (meth)acrylate; unsaturated monomers with isobornyl groups such as isobornyl (meth)acrylate; unsaturated monomers with adamantyl groups such as adamantyl (meth)acrylate; aromatic ring-containing unsaturated monomers such as styrene, α-methylstyrene, vinyltoluene and phenyl (meth)acrylate; unsaturated monomers with alkoxysilyl groups such as vinyltrimethoxysilane, vinyltriethoxysilane, vinyltris(2-methoxyethoxy)silane, γ-(meth)acryloyloxypropyltrimethoxysilane and γ-(meth)acryloyloxypropyltriethoxysilane; perfluoroalkyl (meth)acrylates such as perfluorobutylethyl (meth)acrylate and perfluorooctylethyl (meth)acrylate; unsaturated monomers with fluorinated alkyl groups such as fluoroolefins; unsaturated monomers with photopolymerizable functional groups such as maleimide groups; vinyl compounds such as N-vinylpyrrolidone, ethylene, butadiene, chloroprene, vinyl propionate and vinyl acetate; carboxyl group-containing unsaturated monomers such as (meth)acrylic acid, maleic acid, crotonic acid and β-carboxyethyl acrylate; nitrogen-containing unsaturated monomers such as addition products of amines with (meta)acrylonitrile, (meth)acrylamide, dimethylaminopropyl (meth)acrylamide, dimethylaminoethyl (meth)acrylate or glycidyl (meth)acrylate; epoxy group-containing unsaturated monomers such as glycidyl (meth)acrylate, β-methylglycidyl (meth)acrylate, 3,4-epoxycyclohexylmethyl (meth)acrylate, 3,4-epoxycyclohexylethyl (meth)acrylate, 3,4-epoxycyclohexylpropyl (meth)acrylate and allyl glycidyl ether; (meth)acrylates with polyoxyethylene chains having alkoxy groups at the molecular ends; unsaturated monomers with sulfonate groups which are sodium salts or ammonium salts of 2-acrylamide-2-methylpropanesulfonic acid, allylsulfonic acid, sodium styrenesulfonate salt or sulfoethyl methacrylate; unsaturated monomers with phosphate groups such as 2-acryloyloxyethyl acid phosphate, 2-methacryloyloxyethyl acid phosphate, 2-acryloyloxypropyl acid phosphate and 2-methacryloyloxypropyl acid phosphate; unsaturated monomers with ultraviolet absorbing groups such as 2-hydroxy-4-(3-methacryloyloxy-2-hydroxypropoxy)benzophenone, 2-hydroxy-4-(3-acryloyloxy-2-hydroxypropoxy)benzophenone, 2,2'-dihydroxy-4-(3-methacryloyloxy-2-hydroxypropoxy)benzophenone, 2,2'-dihydroxy-4-(3-acryloyloxy-2-hydroxypropoxy)benzophenone and 2-(2'-hydroxy-5'-methacryloyloxyethylphenyl)-2H-benzotriazole; unsaturated monomers with ultraviolet-stabilizing performance, such as 4-(meth)acryloyloxy-1,2,2,6,6-pentamethylpiperidine, 4-(meth)acryloyloxy-2,2,6,6-tetramethylpiperidine, 4-cyano-4-(meth)acryloylamino-2,2,6,6-tetramethylpiperidine, 1-(meth)acryloyl-4-(meth)acryloylamino-2,2,6,6-tetramethylpiperidine, 1-(meth)acryloyl-4-cyano-4-(meth)acryloylamino-2,2,6,6-tetramethylpiperidine, 4-crotonoyloxy-2,2,6,6-tetramethylpiperidine, 4-crotonoylamino-2,2,6,6-tetramethylpiperidine and 1-crotonoyl-4-crotonoyloxy-2,2,6,6-tetramethylpiperidine; and unsaturated monomer compounds with carbonyl groups such as acrolein, diacetoneacrylamide, diacetonemethacrylamide, acetoacetoxyethyl methacrylate, formylstyrol and vinylalkyl ketones with 4 to 7 carbon atoms (for example, vinyl methyl ketone, vinyl ethyl ketone or vinyl butyl ketone), any of the foregoing of which may be used alone or in combinations of two or more.

Synthesis of the hydroxyl group-containing acrylic resin (Z1) may be carried out using a common polymerization method for unsaturated monomers, with solution-type radical polymerization in an organic solvent being most suitable in consideration of general utility and cost. The hydroxyl group-containing acrylic resin (Z1) can be easily obtained by copolymerization reaction in a solvent, for example, an aromatic solvent such as xylene or toluene; a ketone-based solvent such as methyl ethyl ketone or methyl isobutyl ketone; an esteric solvent such as ethyl acetate, butyl acetate, isobutyl acetate or 3-methoxybutyl acetate; or an alcohol-based solvent such as *n*-butanol or isopropyl alcohol; in the presence of a polymerization initiator such as an azo-based catalyst or a peroxide-based catalyst, at a temperature of about 60°C to about 150°C.

From the viewpoint of finished appearance including smoothness and sharpness, and of the film performance such as weather resistance, the hydroxyl group-containing acrylic resin (Z1) preferably has a hydroxyl value in the range of 80 to 200 mgKOH/g, especially 90 to 170 mgKOH/g and most especially 100 to 140 mgKOH/g, and an acid value in the range of 1 to 40 mgKOH/g, especially 3 to 30 mgKOH/g and most especially 5 to 20 mgKOH/g. From the viewpoint of finished appearance including smoothness and sharpness and of the film performance such as weather resistance, the hydroxyl group-containing acrylic resin (Z1) preferably has a weight-average molecular weight in the range of 4000 to 20,000, especially 6000 to 16,000 and most especially 8000 to 12,000.

The polyisocyanate compound (Z2) is a compound having at least two isocyanate groups in each molecule, and examples include aliphatic polyisocyanates, alicyclic polyisocyanates, aromatic aliphatic polyisocyanates, aromatic polyisocyanates and derivatives of these polyisocyanates, and any of the polyisocyanate compounds mentioned above for the polyisocyanate compound (X2) may be selected for use as appropriate, either alone or in combinations of two or more. Among these polyisocyanate compounds, it is preferred to use aliphatic diisocyanates and aliphatic diisocyanate derivatives, from the viewpoint of smoothness, sharpness and weather resistance of the coating film that is to be obtained.

From the viewpoint of the low-temperature curing property, the two-component type clear coating material (Z) preferably contains the hydroxyl group-containing acrylic resin (Z1) and the polyisocyanate compound (Z2) in a proportion for 1.1 to 2.0 equivalents and especially 1.1 to 1.8 equivalents of isocyanate groups in the polyisocyanate compound (Z2) with respect to 1 equivalent of hydroxyl groups in the hydroxyl group-containing acrylic resin (Z1).

The two-component type clear coating material (Z) may also contain, as necessary, color pigments, lustrous pigments, dyes and the like in ranges that do not impair the transparency, and may further contain, as suitable, extender pigments, ultraviolet absorbers, light stabilizers, antifoaming agents, thickening agents, rust-preventive agents, surface control agents and the like.

The two-component type clear coating material (Z) is usually preferred to be a two-component type coating material comprising a base compound containing the hydroxyl group-containing acrylic resin (Z1) and a curing agent containing the polyisocyanate compound (Z2).

The two-component type clear coating material (Z) may be applied onto the surface of the second pigmented coating film by a known method, such as air spray coating, airless spray coating or rotary atomizing coating, for example, and electrostatic application may also be carried out during the coating. The clear coating material (Z) may usually be applied to a cured film thickness in the range of 10 to 80 µm, preferably 15 to 60 µm and more preferably 20 to 50 µm.

After application of the two-component type clear coating material (Z), it may be left to stand at room temperature for an interval of about 1 to 60 minutes, or preheated for about 1 to 60 minutes at a temperature of about 40°C to about 80°C, as necessary.

### Step (4)

In the multilayer coating film-forming method of the invention, the uncured first pigmented coating film, the uncured second pigmented coating film and the uncured clear coating film formed in steps (1) to (3) described above are simultaneously cured by heating.

Curing of the first pigmented coating film, second pigmented coating film and clear coating film can be carried out by common coating film baking means, such as hot air heating, infrared heating or high-frequency heating. The heating temperature may usually be in the range of about 60°C to about 120°C, and is preferably about 70°C to about 100°C and more preferably about 80°C to about 100°C. The heating time is not particularly restricted but will usually be 10 to 60 minutes, and most preferably 15 to 40 minutes. Heating allows simultaneous curing of a multilayer coating film comprising three layers: the first pigmented coating film, the second pigmented coating film and the uncured clear coating film.

### EXAMPLES

The present invention will now be explained in greater detail using examples and comparative examples. The "parts" and "%" values are all based on mass.

### Production of aqueous first pigmented coating material (X)

### Production Example 1

A pigment-dispersed paste (P-1)^{*2} at a solid content of 110.6 parts, an acryl-modified polyester resin aqueous dispersion (X1-1)^{*1} at a solid content of 10 parts, a hydroxyl group-containing acrylic resin aqueous dispersion (X1-2)^{*3} at a solid content of 15 parts, "UCOAT UX-310" (trade name of Sanyo Chemical Industries, Ltd., polycarbonate-based aqueous polyurethane resin) at a solid content of 20 parts, 2-(dimethylamino)ethanol and deionized water added for adjustment of the pH, and "BAYHYDUR XP-2655" (trade name of Sumika Covestro Urethane Co., Ltd., polyisocyanate compound) at 35 parts (NCO/OH ratio: 1.55), were uniformly mixed to obtain an aqueous first pigmented coating material (X-1) having a solid content of 51% and a viscosity of 20 seconds with a Ford cup No. 4 at 20°C.

### Production Example 2

An aqueous first pigmented coating material (X-2) was obtained in the same manner as Production Example 1, except that the 35 parts of "BAYHYDUR XP-2655" in Production Example 1 was changed to 43 parts of "BAYHYDUR 3100" (trade name of Sumika Covestro Urethane Co., Ltd., polyisocyanate compound) (NCO/OH ratio: 1.55).

* 1: Acryl-modified polyester resin aqueous dispersion (X1-1): After charging 85 parts of hexahydrophthalic anhydride, 51.6 parts of adipic acid, 39.1 parts of 1,6-hexanediol, 34.8 parts of neopentyl glycol, 35.3 parts of 2-butyl-2-ethyl-1,3-propanediol, 2.16 parts of maleic anhydride and 30.1 parts of trimethylolpropane in a reactor equipped with a thermometer, thermostat, stirrer, heating apparatus and rectification column, the temperature was raised to 160°C while stirring. The temperature of the contents was then gradually increased from 160°C to 240°C over a period of 4 hours, and the condensation water that was generated was distilled off through the rectification column. After continuing the reaction at 240°C for 90 minutes, the rectification column was replaced with a water separator, approximately 15 parts of toluene was added to the contents, and the water and toluene were azeotropically distilled off to remove the condensation water. Measurement of the acid value was initiated 1 hour after addition of the toluene, terminating the heating upon confirming that the acid value had fallen below 3.5, and removing the toluene under reduced pressure, after which the mixture was cooled and 58 parts of dipropyleneglycol monomethyl ether was added. The mixture was cooled to 130°C, and a mixture of 9 parts of styrene, 12.6 parts of acrylic acid, 23.4 parts of 2-ethylhexyl acrylate and 2.2 parts of t-butylperoxy-2-ethyl hexanoate was added dropwise over a period of 2 hours. It was then kept at 130°C for 30 minutes, after which 0.44 part of *t*-butylperoxy-2-ethyl hexanoate as an additional catalyst was added and the mixture was aged for 1 hour. After then cooling to 85°C, it was neutralized with dimethylethanolamine, deionized water was added, and the mixture was dispersed in water to obtain an acryl-modified polyester resin aqueous dispersion (X1-1) with a solid content of 35%. The obtained acryl-modified polyester resin had an acid value of 35 mgKOH/g, a hydroxyl value of 110 mgKOH/g and a number-average molecular weight of 2300.

*2: Pigment-dispersed paste (P-1): After placing the aforementioned acryl-modified polyester resin aqueous dispersion (X1-1)^{*1} at a solid mass of 20 parts, "JR-806" (trade name of Tayca Corp., rutile titanium dioxide) at 60 parts, "BLANC FIXE micro" (trade name of Sachtleben Chemie Co., barium sulfate, particle size: 0.7 µm) at 30 parts, "Mitsubishi Carbon Black MA-100" (trade name of Mitsubishi Chemical Corp., carbon black) at 0.6 part and deionized water at 30 parts in a stirring mixing vessel, they were uniformly mixed and 2-(dimethylamino)ethanol was further added for adjustment to pH 8.0. Next, the obtained liquid mixture was placed in a wide-mouth glass bottle, glass beads of approximately 1.3 mmϕ diameter were added as a dispersion medium, the bottle was sealed, and the mixture was dispersed for 4 hours with a paint shaker to obtain a pigment dispersion (P-1).

*3: Hydroxyl group-containing acrylic resin aqueous dispersion (X1-2): Aqueous dispersion of a core-shell type hydroxyl group-containing acrylic resin with a hydroxyl value of 65 mgKOH/g, an acid value of 13 mgKOH/g and a solid concentration of 30%.

### Production of water-dispersible hydroxyl group-containing acrylic resin (Y1)

### Production Example 3

After charging 120 parts of deionized water and 0.52 part of "ADEKA REASOAP SR-1025" (trade name of Adeka Corp., emulsifying agent, active ingredient: 25%) into a reactor equipped with a thermometer, thermostat, stirrer, reflux condenser, nitrogen inlet tube and dropper, the mixture was stirred under a nitrogen stream and heated to 80°C. Next, 1% of the total monomer emulsion (1) described below and 2.2 parts of a 6% ammonium persulfate aqueous solution were introduced into the reactor, and the mixture was kept at 80°C for 15 minutes. The remainder of the monomer emulsion (1) was then added dropwise into the reactor kept at the same temperature over a period of 3 hours, and upon completion of the dropwise addition the mixture was aged for 1 hour. Next, the monomer emulsion (2) described below was added dropwise over a period of 1 hour and aged for 1 hour, and then cooled to 30°C while gradually adding 40 parts of a 5% 2-(dimethylamino)ethanol water-soluble solution to the reactor, to obtain a water-dispersible hydroxyl group-containing acrylic resin dispersion (Y1-1) having a mean particle diameter of 195 nm (measured at 20°C using a "COULTER N4" submicron particle size distribution analyzer (product of Beckman Coulter, Inc.) after dilution with deionized water) and a solid concentration of 30%. The obtained water-dispersible acrylic resin had a hydroxyl value of 24 mgKOH/g and an acid value of 8 mgKOH/g.

Monomer emulsion (1): Monomer emulsion (1) was obtained by mixing and stirring 54 parts of deionized water, 6.9 parts of "ADEKA REASOAP SR-1025", 49 parts of 2-ethylhexyl acrylate, 23 parts of ethyl acrylate, 13 parts of methyl methacrylate, 4.5 parts of 2-hydroxyethyl methacrylate and 0.2 part of allyl methacrylate.

Monomer emulsion (2): Monomer emulsion (2) was obtained by mixing and stirring 12 parts of deionized water, 0.8 part of "ADEKA REASOAP SR-1025", 0.2 part of ammonium persulfate, 3.1 parts of methyl methacrylate, 5 parts of ethyl acrylate, 1 part of 2-hydroxyethyl methacrylate and 1.2 parts of methacrylic acid.

### Production Examples 4 to 8

Water-dispersible hydroxyl group-containing acrylic resin dispersions (Y1-2) to (Y1-6) were obtained by the same procedure as Production Example 3, except that the monomer compositions for monomer emulsions (1) and (2) were changed as shown in Table 1.

**[Table 1]**

| Production Example | | | | 3 | 4 | 5 | 6 | 7 | 8 |
|---|---|---|---|---|---|---|---|---|---|
| Water-dispersible hydroxyl group-containing acrylic resin aqueous dispersion name | | | | Y1-1 | Yl-2 | Yl-3 | Yl-4 | Yl-5 | Yl-6 |
| Deionized water | | | | 120 | 110 | 110 | 110 | 110 | 110 |
| ADEKA REASOAP SR-1025 | | | | 0.52 | 0.52 | 0.52 | 0.52 | 0.52 | 0.52 |
| 6% Ammonium persulfate aqueous solution | | | | 2.2 | 2.2 | 2.2 | 2.2 | 2.2 | 2.2 |
| Monomer emulsion for core section (1) | Deionized water | | | 54 | 54 | 54 | 54 | 54 | 54 |
| | ADEKA REASOAP SR-1025 | | | 6.9 | 4.7 | 4.7 | 4.7 | 4.7 | 4.7 |
| | Monomer components | Polymerizable unsaturated monomer (a-1) with homopolymer glass transition temperature of ≤-20°C | Ethyl acrylate | 23 | 39 | 49 | 46 | | |
| | | | 2-Ethylhexyl acrylate | 49 | | | | | 27 |
| | | | n-Butyl acrylate | | | | | 34 | |
| | | Hydroxyl group-containing polymerizable unsaturated monomer (a-2) | 2-Hydroxyethyl methacrylate | 4.5 | | | 10 | | 2.3 |
| | | Carboxyl group-containing polymerizable unsaturated monomer (a-3) | Acrylic acid | | | | | | 0.5 |
| | | Polymerizable unsaturated monomer (a-4) other than monomers (a-1) to (a-3) | Methyl methacrylate | 13 | 30 | 19 | 12 | 15 | |
| | | | Styrene | | 7 | 7 | 7 | 7 | 45 |
| | | | n-Butyl methacrylate | | | | | 20 | |
| | | | 1,6-HDDA | | 1.5 | 1.5 | 1.5 | 1.5 | |
| | | | Allyl methacrylate | 0.2 | | | | | |
| Monomer emulsion for shell section (2) | Deionized water | | | 12 | 39 | 39 | 39 | 39 | 39 |
| | Ammonium persulfate | | | 0.2 | 0.15 | 0.15 | 0.15 | 0.15 | 0.15 |
| | ADEKA REASOAP SR-1025 | | | 0.8 | 1.38 | 1.38 | 1.38 | 1.38 | 1.38 |
| | Monomer components | Polymerizable unsaturated monomer (a-1) with homopolymer glass transition temperature of ≤-20°C | Ethyl acrylate | 5 | 9 | 15 | 15 | | |
| | | | n-Butyl acrylate | | | | | 9 | |
| | | | 2-Ethylhexyl acrylate | | | | | | 8.2 |
| | | Hydroxyl group-containing polymerizable unsaturated monomer (a-2) | 2-Hydroxyethyl methacrylate | 1 | | 4.8 | 4.8 | 3.5 | 2 |
| | | | Hydroxyethyl acrylate | | 1.9 | | | | |
| | | Carboxyl group-containing polymerizable unsaturated monomer (a-3) | Acrylic acid | | | | | | 1 |
| | | | Methacrylic acid | 1.2 | 1.6 | 1.6 | 1.6 | 1.6 | |
| | | Polymerizable unsaturated monomer (a-4) other than monomers (a-1) to (a-3) | Styrene | | 2 | 2 | 2 | 2 | 14 |
| | | | n-Butyl methacrylate | | | | | 4 | |
| | | | Methyl methacrylate | 3.1 | 8 | | | 3 | |
| 5% 2-(Dimethylamino)ethanol aqueous solution | | | | 40 | 4 | 4 | 4 | 4 | 4 |
| | | | | | | | | | |
| Total amount of polymerizable unsaturated monomers [parts] | | | | 100 | 100 | 100 | 100 | 100 | 100 |
| Total amount of monomer component for formation of core section [parts] | | | | 89.7 | 77.5 | 77 | 77 | 78 | 75 |
| Total amount of monomer component for formation of shell section [parts] | | | | 10.3 | 22.5 | 23 | 23 | 23 | 25 |
| Proportion of each monomer based on total amount of polymerizable unsaturated monomers [mass%] | | Polymerizable unsaturated monomer (a-1) with homopolymer glass transition temperature of ≤-20°C | | 77 | 48 | 64 | 61 | 43 | 35 |
| | | Hydroxyl group-containing polymerizable unsaturated monomer (a-2) | | 5.5 | 1.9 | 4.8 | 14.8 | 3.5 | 2 |
| | | Carboxyl group-containing polymerizable unsaturated monomer (a-3) | | 1.2 | 1.6 | 1.6 | 1.6 | 1.6 | 2 |
| | | Polymerizable unsaturated monomer (a-4) other than monomers (a-1) to (a-3) | | 16.3 | 48.5 | 29.6 | 22.6 | 51.9 | 63 |
| Solid content [%] | | | | 30 | 32 | 32 | 32 | 32 | 32 |
| Acid value [mgKOH/g] | | | | 8 | 11 | 10 | 10 | 10 | 9 |
| Hydroxyl value [mgKOH/g] | | | | 24 | 9 | 21 | 64 | 15 | 19 |

### Production of hydroxyl group-containing polyester resin (Y2)

### Production Examples 9 to 12

After charging the acid components and alcohol components in the molar ratios listed in Table 1 into a four-necked flask equipped with a heating apparatus, stirrer, thermometer, reflux condenser and rectification column and raising the temperature to 160°C, the temperature was increased from 160°C to 230°C over a period of 3 hours while distilling off the generated condensation water using a rectification column, and then reaction was conducted at 230°C for 2 hours.

The rectification column was then switched to a water separator and toluene was appropriately added, maintaining a state of circulation at 230°C, and condensation reaction was conducted while separating and distilling off the condensation water with the water separator.

When the resin acid value reached 7, the toluene was removed under reduced pressure and the mixture was cooled to 170°C. Trimellitic anhydride was added to the reaction product in the molar ratios listed in Table 1, and after addition reaction for 60 minutes at 170°C, propyleneglycol monomethyl ether was added at 10% with respect to the reaction product and the temperature was adjusted to 85°C, and then neutralization was performed with N,N-dimethylethanolamine and deionized water was further added in a gradual manner to form an aqueous dispersion, thus obtaining polyester resins (Y2-1) to (Y2-4) with solid contents of 45% (all adjusted to pH 8.5). Table 2 shows the acid values, hydroxyl values and number-average molecular weights of each of the obtained hydroxyl group-containing polyester resins (Y2-1) to (Y2-4).

**[Table 2]**

| Production Example | 9 | 10 | 11 | 12 |
|---|---|---|---|---|
| Polyester resin (Y2) name | Y2-1 | Y2-2 | Y2-3 | Y2-4 |
| 1,2-Cyclohexanedicarboxylic anhydride | 0.27 | 0.53 | 0.55 | 0.55 |
| Adipic acid | 0.58 | 0.32 | 0.25 | 0.3 |
| Trimethylolpropane | 0.35 | 0.2 | 0.45 | 0.4 |
| Neopentyl glycol | | | 0.15 | |
| 2-Butyl-2-ethyl-1,3-propanediol | 0.65 | 0.8 | 0.4 | 0.6 |
| Trimellitic anhydride (addition acid, acid component) | 0.028 | 0.028 | 0.02 | 0.0165 |
| DBR | 0.85 | 0.85 | 0.8 | 0.85 |
| mol% (b-1) in acid component | 31 | 60 | 67 | 63 |
| Hydroxyl value (mgKOH/g) | 142 | 105 | 195 | 151 |
| Acid value (mgKOH/g) | 19 | 19 | 16 | 12 |
| Number-average molecular weight | 1400 | 1500 | 1000 | 1500 |

### Production of active methylene blocked polyisocyanate compounds

### Production Example 13

After charging 360 parts of "SUMIDUR N-3300" (trade name of Sumika Bayer Urethane Co., Ltd., polyisocyanate containing an isocyanurate structure derived from hexamethylene diisocyanate, solid content: approximately 100%, isocyanate group content: 21.8%), 60 parts of "UNIOX M-550" (product of NOF Corp., polyethyleneglycol monomethyl ether, average molecular weight: approximately 550) and 0.2 part of 2,6-di-tert-butyl-4-methylphenol into a reactor equipped with a thermometer, thermostat, stirrer, reflux condenser, nitrogen inlet tube, dropper and simple trap for the removed solvent, the contents were thoroughly mixed and heated under a nitrogen stream at 130°C for 3 hours. Next, 110 parts of ethyl acetate and 252 parts of diisopropyl malonate were charged in, 3 parts of a 28% methanol solution of sodium methoxide was added while stirring under a nitrogen stream, and stirring was continued at 65°C for 8 hours. The isocyanate content in the obtained resin solution was 0.12 mol/Kg. After adding 683 parts of 4-methyl-2-pentanol, the solvent was distilled off over a period of 3 hours under reduced pressure conditions while maintaining a system temperature of 80°C to 85°C, to obtain 1010 parts of a blocked polyisocyanate compound solution (Y3-1). The simple trap for the removed solvent included 95 parts of isopropanol. The solid concentration of the obtained blocked polyisocyanate compound solution (Y3-1) was approximately 60%.

### Production Example 14

After charging 360 parts of "SUMIDUR N-3300", 50 parts of "UNIOX M-400" (product of NOF Corp., polyethyleneglycol monomethyl ether, average molecular weight: approximately 400), 5 parts of "PEG#600" (product of NOF Corp., polyethylene glycol, average molecular weight: approximately 600) and 0.2 part of 2,6-di-tert-butyl-4-methylphenol into a reactor equipped with a thermometer, thermostat, stirrer, reflux condenser, nitrogen inlet tube, dropper and simple trap for the removed solvent, the contents were thoroughly mixed and heated at 130°C for 3 hours under a nitrogen stream. Next, 110 parts of ethyl acetate and 247 parts of diisopropyl malonate were charged in, 3 parts of a 28% methanol solution of sodium methoxide was added while stirring under a nitrogen stream, and stirring was continued at 65°C for 8 hours. The isocyanate content in the obtained resin solution was 0.11 mol/Kg. After adding 670 parts of 4-methyl-2-pentanol, the solvent was distilled off over a period of 3 hours under reduced pressure conditions while maintaining a system temperature of 80°C to 85°C, to obtain 1010 parts of a blocked polyisocyanate compound solution (Y3-2). The simple trap for the removed solvent included 92 parts of isopropanol. The solid concentration of the obtained blocked polyisocyanate compound solution (Y3-2) was approximately 60%.

### Production of aqueous second pigmented coating material (Y)

### Production Example 15

After thoroughly mixing 120 parts of the water-dispersible hydroxyl group-containing acrylic resin dispersion (Y1-1) obtained in Production Example 3 (solid resin content: 36 parts), 71.4 parts of the hydroxyl group-containing polyester resin solution (Y2-1) obtained in Production Example 9 (solid resin content: 27 parts), 26.3 parts of "UX-3945" (trade name of Sanyo Chemical Industries, Ltd., aqueous polyurethane resin) (solid resin content: 10 parts), 63 parts of a lustrous pigment concentrate (P-2)^{*4}, 16.6 parts of the blocked polyisocyanate compound solution (Y3-1) obtained in Production Example 13 (solid resin content: 10 parts) and 11.1 parts of a melamine resin ("CYMEL 327", trade name of Allnex Co.) (solid resin content: 10 parts), there were further added "PRIMAL ASE-60" (trade name of Rohm & Haas, thickening agent), 2-(dimethylamino)ethanol and deionized water, to obtain an aqueous second pigmented coating material (Y-1) having a pH of 8.0, a coating material solid content of 25%, and a viscosity of 40 seconds with a Ford cup No. 4 at 20°C.

*4: Lustrous pigment concentrate (P-2): In a stirring and mixing container there were uniformly mixed 20 parts of an aluminum pigment paste (GX-180A, trade name of Asahi Kasei Metals Co., Ltd., metal content: 74%), 35 parts of 2-ethyl-1-hexanol, 8 parts of a phosphate group-containing resin solution^{*5} and 0.2 part of 2-(dimethylamino)ethanol, to obtain a lustrous pigment dispersion.

*5: Phosphate group-containing resin solution: A mixed solvent comprising 27.5 parts of methoxypropanol and 27.5 parts of isobutanol was placed in a reactor equipped with a thermometer, thermostat, stirrer, reflux condenser, nitrogen inlet tube and dropper, and heated to 110°C. Next, 121.5 parts of a mixture comprising 25 parts of styrene, 27.5 parts of n-butyl methacrylate, 20 parts of a branched higher alkyl acrylate (trade name: "Isostearyl Acrylate", product of Osaka Organic Chemical Industry, Ltd.), 7.5 parts of 4-hydroxybutyl acrylate, 15 parts of a phosphate group-containing polymerizable monomer^{*6}, 12.5 parts of 2-methacryloyloxyethyl acid phosphate, 10 parts of isobutanol and 4 parts of t-butyl peroxyoctanoate was added to the mixed solvent over a period of 4 hours, and then a mixture of 0.5 part of t-butyl peroxyoctanoate and 20 parts of isopropanol was added dropwise over a period of one hour. The mixture was subsequently aged while stirring for 1 hour to obtain a phosphate group-containing resin solution with a solid concentration of 50%. The acid value due to the phosphate groups of the phosphate group-containing resin was 83 mgKOH/g, the hydroxyl value was 29 mgKOH/g and the weight-average molecular weight was 10,000.

*6: Phosphate group-containing polymerizable monomer solution: After placing 57.5 parts of monobutylphosphoric acid and 41 parts of isobutanol in a reactor equipped with a thermometer, thermostat, stirrer, reflux condenser, nitrogen inlet tube and dropper and heating them to 90°C, 42.5 parts of glycidyl methacrylate was added dropwise over a period of 2 hours. After then ageing the mixture while stirring for 1 hour, 59 parts of isopropanol was added to obtain a phosphate group-containing polymerizable monomer solution with a solid concentration of 50%. The acid value due to the phosphate groups in the obtained monomer was 285 mgKOH/g.

### Production Examples 16 to 25

Aqueous second pigmented coating materials (Y-2) to (Y-11) were obtained in the same manner as Production Example 15, except that the composition in Production Example 15 was as shown in Table 3.

**[Table 3]**

| Production Example | | 15 | 16 | 17 | 18 | 19 | 20 | 21 | 22 | 23 | 24 | 25 |
|---|---|---|---|---|---|---|---|---|---|---|---|---|
| Aqueous second pigmented coating material name | | Y-1 | Y-2 | Y-3 | Y-4 | Y-5 | Y-6 | Y-7 | Y-8 | Y-9 | Y-10 | Y-11 |
| Lustrous pigment concentrate (P-2) (*4) | | 19 | 19 | 19 | 19 | 19 | 19 | 19 | 19 | 19 | 19 | 19 |
| Water-dispersible hydroxyl group-containing acrylic resin | Y1-1 | 36 | | | | | 36 | 36 | 36 | 36 | 36 | |
| | Y1-2 | | 36 | | | | | | | | | |
| | Y1-3 | | | 36 | | | | | | | | |
| | Y1-4 | | | | 36 | | | | | | | |
| | Y1-5 | | | | | 36 | | | | | | |
| | Y1-6 | | | | | | | | | | | 36 |
| Hydroxyl group-containing polyester resin | Y2-1 | 27 | 27 | 27 | 27 | 27 | 27 | 27 | | | | 27 |
| | Y2-2 | | | | | | | | 27 | | | |
| | Y2-3 | | | | | | | | | 27 | | |
| | Y2-4 | | | | | | | | | | 27 | |
| Polyurethane resin | | 10 | 10 | 10 | 10 | 10 | | 10 | 10 | 10 | 10 | 10 |
| Blocked polyisocyanate | | 10 | 10 | 10 | 10 | 10 | 20 | 20 | 10 | 10 | 10 | 10 |
| Melamine resin | | 10 | 10 | 10 | 10 | 10 | 10 | | 10 | 10 | 10 | 10 |

### Production of hydroxyl group-containing acrylic resin (Z1)

### Production Example 26

After charging 31 parts of ethoxyethyl propionate into a four-necked flask equipped with a stirrer, thermometer, condenser tube and nitrogen gas inlet, the temperature was raised to 155°C under a nitrogen gas stream. After reaching 155°C, aeration with nitrogen gas was stopped and a monomer mixture with a composition comprising 30 parts of styrene, 37.5 parts of n-butyl acrylate, 30 parts of 2-hydroxypropyl acrylate, 2.5 parts of acrylic acid and 4 parts of di-tertiary amyl peroxide (polymerization initiator) was added dropwise over a period of 4 hours. After 30 minutes, a polymerization initiator solution comprising 0.5 part of 2,2'-azobis(2,4-dimethylvaleronitrile) (polymerization initiator) dissolved in 3 parts of SWASOL 1000 (hydrocarbon-based solvent) was added dropwise over a period of one hour. After then ageing for 2 hours while streaming nitrogen gas at 155°C, the mixture was cooled to 100°C and diluted with 29 parts of butyl acetate to obtain a solution of a hydroxyl group-containing acrylic resin (Z1-1) with a solid content of 60%. The hydroxyl group-containing acrylic resin (Z1-1) had a hydroxyl value of 129 mgKOH/g, an acid value of 19 mgKOH/g and a weight-average molecular weight of approximately 12,000.

### Production Example 27

A hydroxyl group-containing acrylic resin (Z1-2) solution with a solid content of 60% was obtained by production in the same manner as Production Example 26, except that the monomer mixture having a composition comprising 30 parts of styrene, 37.5 parts of n-butyl acrylate, 30 parts of 2-hydroxypropyl acrylate, 2.5 parts of acrylic acid and 4 parts of di-tertiary amyl peroxide (polymerization initiator) in Production Example 26 was changed to a monomer mixture having a composition comprising 30 parts of styrene, 40.5 parts of n-butyl acrylate, 27 parts of 2-hydroxyethyl acrylate, 2.5 parts of acrylic acid and 4 parts of di-tertiary amyl peroxide (polymerization initiator). The obtained hydroxyl group-containing acrylic resin (Z1-2) had a hydroxyl value of 129 mgKOH/g, an acid value of 19 mgKOH/g and a weight-average molecular weight of approximately 12,000.

### Production of clear coating material (Z)

### Production Example 28

After uniformly mixing 100 parts of the hydroxyl group-containing acrylic resin (Z1-1) solution obtained in Production Example 26 (solid content: 60 parts), 45 parts of "DESMODUR N3900" (trade name of Sumika Covestro Urethane Co., Ltd., polyisocyanate compound) (NCO/OH ratio: 1.6), 0.2 part of "BYK-300" (trade name of Byk-Chemie Corp., surface control agent, active ingredient: 52%), 2.0 parts of "TINUVIN900" (trade name of B.A.S.F. Corp., benzotriazole-based ultraviolet absorber, active ingredient: 100%) and 1.0 part of "TINUVIN292" (trade name of B.A.S.F. Corp., hindered amine-based light stabilizer, active ingredient: 100%), "SWASOL 1000" (trade name of Cosmo Oil Co., Ltd., hydrocarbon-based solvent) was further added to obtain a clear coating material (Z-1) having a viscosity of 25 seconds with a Ford cup No. 4 at 20°C.

### Production Example 29

A clear coating material (Z-2) was obtained in the same manner as Production Example 28, except for using the hydroxyl group-containing acrylic resin (Z1-2) solution obtained in Production Example 27 in the process of Production Example 28 instead of the hydroxyl group-containing acrylic resin (Z1-1) solution obtained in Production Example 26.

### Production Example 30

A clear coating material (Z-3) was obtained in the same manner as Production Example 28, except that the "DESMODUR N3900" in Production Example 28 was changed to 45 parts of "DURANATE TLA-100" (trade name of Asahi Kasei Chemicals Corp., polyisocyanate compound) (NCO/OH ratio: 1.6).

### Fabrication of test coating articles

A cold-rolled steel sheet that had been subjected to zinc phosphate chemical conversion treatment was electrodeposited with ELECRON GT-10 (trade name of Kansai Paint Co., Ltd., cationic electrodeposition coating) to a dry film thickness of 20 µm, and was heated at 170°C for 30 minutes for curing to produce a test coating article (1).

A polypropylene sheet (degreasing treated) was also air spray coated with the primer "SOFLEX 3100" (trade name of Kansai Paint Co., Ltd., polyolefin-containing conductive organic solvent-based coating material) to a dry film thickness of 10 µm, and heat cured at 80°C for 30 minutes to obtain a test coating article (2).

### Fabrication of test coated sheets

### Example 1

The test coating article (1) was electrostatically coated with the aqueous first pigmented coating material (X-1) obtained in Production Example 1 to a dry film thickness of 20 µm using a rotary atomizing electrostatic coater, and allowed to stand for 2 minutes, after which the uncured first pigmented coating film was electrostatically coated with the aqueous second pigmented coating material (Y-1) obtained in Production Example 15 to a dry film thickness of 10 µm using a rotary atomizing electrostatic coater and allowed to stand for 2 minutes, and then preheated at 80°C for 3 minutes.

The base coating film was electrostatically coated with the clear coating material (Z-1) obtained in Production Example 28 to a dry film thickness of 35 µm, and allowed to stand for 7 minutes. It was subsequently heated at 95°C for 20 minutes (keep time) and the 3-layer coated film was heat cured to prepare a test coated sheet.

### Examples 2 to 17 and Comparative Examples 1 and 2

Test coated sheets were prepared in the same manner as Example 1, except that the article to be coated, aqueous first pigmented coating material, aqueous second pigmented coating material and clear coating material in Example 1 were changed to the combinations listed in Table 4.

### Evaluation tests

Each of the test sheets obtained in Examples 1 to 17 and Comparative Examples 1 and 2 were evaluated by the following test methods. The evaluation results are summarized in Table 4.

### (Test methods)

Pencil hardness: Following the procedure specified by JIS K 5600-5-4, the core of a pencil was placed against the test coated sheet surface at an angle of about 45°, and was moved forward approximately 10 mm at a uniform speed while firmly pressing it against the test coated sheet surface without breaking the core. The hardness number of the hardest pencil with which the coated film did not tear was recorded as the pencil hardness.

Smoothness: Evaluation was conducted using the Wc value measured with a Wave Scan DOI (trade name of BYK Gardner). The Wc value is an index of the amplitude of surface roughness with a wavelength of about 1 to 3 mm, with a smaller measured value representing higher smoothness of the coating surface.

Sharpness: Evaluation was conducted using the Wa value measured with a Wave Scan DOI. The Wa value is an index of the amplitude of surface roughness with a wavelength of about 0.1 to 0.3 mm, with a smaller measured value representing higher sharpness of the coating surface.

Chipping resistance: The test sheet was set on the sample holding stage of a chipping tester (trade name "Q-G-R Gravelometer" by Q-Panel Co.), and at a temperature of -20°C, 100 g of crushed granite of grain size #6 was impacted onto the test sheet at an angle of 90° using compressed air at 480 to 520 kPa, from a location 30 cm distant from the test sheet. The obtained test sheet was then washed and dried, and cloth adhesive tape (product of Nichiban Co., Ltd.) was attached to the coating surface. The tape was peeled off, and the area where the electrodeposition surface and the underlying member were exposed ("detached surface area") was used to evaluate the percentage (%) of the detached surface area with respect to the test coated sheet area.

Acceptability was judged to be a detached surface area percentage of less than 5% with respect to the test coated sheet area.

**[Table 4]**

| | Article to be coated | Aqueous first pigmented coating material | Aqueous second pigmented coating material | Clear coating material | Evaluation | | | |
|---|---|---|---|---|---|---|---|---|
| | | | | | Pencil hardness | Smoothness | Sharpness | Chipping resistance |
| Example 1 | (1) | X-1 | Y-1 | Z-1 | B | 6 | 9 | 3 |
| Example 2 | (1) | X-1 | Y-2 | Z-1 | B | 5 | 10 | 4 |
| Example 3 | (1) | X-1 | Y-3 | Z-1 | B | 6 | 10 | 3 |
| Example 4 | (1) | X-1 | Y-4 | Z-1 | B | 6 | 10 | 4 |
| Example 5 | (1) | X-1 | Y-5 | Z-1 | B | 6 | 9 | 3 |
| Example 6 | (1) | X-1 | Y-6 | Z-1 | B | 5 | 9 | 3 |
| Example 7 | (1) | X-1 | Y-7 | Z-1 | B | 5 | 10 | 3 |
| Example 8 | (1) | X-1 | Y-8 | Z-1 | B | 6 | 9 | 3 |
| Example 9 | (1) | X-1 | Y-9 | Z-1 | B | 6 | 10 | 4 |
| Example 10 | (1) | X-1 | Y-10 | Z-1 | B | 6 | 10 | 4 |
| Example 11 | (1) | X-2 | Y-1 | Z-1 | B | 5 | 9 | 4 |
| Example 11 | (1) | X-1 | Y-1 | Z-2 | B | 6 | 9 | 3 |
| Example 12 | (1) | X-1 | Y-1 | Z-3 | B | 6 | 9 | 3 |
| Example 13 | (2) | X-1 | Y-1 | Z-1 | 4B | 6 | 8 | 3 |
| Example 14 | (2) | X-1 | Y-2 | Z-1 | 4B | 5 | 10 | 4 |
| Example 15 | (2) | X-1 | Y-4 | Z-1 | 4B | 6 | 10 | 4 |
| Example 16 | (2) | X-1 | Y-5 | Z-1 | 4B | 6 | 9 | 3 |
| Example 17 | (2) | X-1 | Y-1 | Z-2 | 4B | 6 | 9 | 4 |
| Comp. Example 1 | (1) | X-1 | Y-11 | Z-1 | B | 6 | 17 | 6 |
| Comp. Example 2 | (2) | X-1 | Y-11 | Z-1 | 4B | 6 | 18 | 6 |

## Claims

1. A multilayer coating film-forming method that includes carrying out, in the following order:
(1) a step of applying an aqueous two-component type first pigmented coating material (X) on an article to be coated to form an uncured first pigmented coating film,
(2) a step of applying an aqueous one-component type second pigmented coating material (Y) onto the uncured first pigmented coating film obtained in step (1) to form an uncured second pigmented coating film,
(3) a step of applying a two-component type clear coating material (Z) onto the uncured second pigmented coating film obtained in step (2) to form an uncured clear coating film, and
(4) a step of heating the uncured first pigmented coating film, the uncured second pigmented coating film and the uncured clear coating film formed in steps (1) to (3) to simultaneously cure the coated films, wherein:
the aqueous one-component type second pigmented coating material (Y) contains a hydroxyl group-containing acrylic resin (Y1), a hydroxyl group-containing polyester resin (Y2) and a blocked polyisocyanate compound and/or melamine resin (Y3),
the hydroxyl group-containing acrylic resin (Y1) includes a core-shell type water-dispersible hydroxyl group-containing acrylic resin (Y11),
the core-shell type water-dispersible hydroxyl group-containing acrylic resin (Y11) has a core-shell type structure, and the content ratios of each of the monomers in the total amount of the monomer components composing the core section and shell section of the core-shell type structure, based on the total mass of the monomer components composing the core section and shell section, are:
40 to 85 mass% of a polymerizable unsaturated monomer (a-1) with a homopolymer glass transition temperature of no higher than -20°C as determined according to the description,
0.1 to 15 mass% of a hydroxyl group-containing polymerizable unsaturated monomer (a-2),
0.1 to 10 mass% of a carboxyl group-containing polymerizable unsaturated monomer (a-3) and
0 to 59.8 mass% of a polymerizable unsaturated monomer (a-4) other than the polymerizable unsaturated monomers (a-1) to (a-3), and
the hydroxyl group-containing polyester resin (Y2) includes a polyester resin (Y21) having a hydroxyl value of 100 to 200 mgKOH/g and an acid value of 10 to 30 mgKOH/g and
wherein the aqueous two-component type first pigmented coating material (X) contains a hydroxyl group-containing resin (X1) and a polyisocyanate compound (X2) at 1.1 to 2.0 equivalents of isocyanate groups in the polyisocyanate compound (X2) with respect to 1 equivalent of hydroxyl groups in the hydroxyl group-containing resin (X1).

2. The multilayer coating film-forming method according to claim 1, wherein the hydroxyl group-containing polyester resin (Y21) includes an alicyclic polybasic carboxylic acid which includes acid anhydrides (b-1) as the acid component of the starting material, the content of the alicyclic polybasic carboxylic acid (which includes acid anhydrides) (b-1) being at least 30 mol% based on the total amount of the acid component, and includes a diol (b-2) having a branched alkylene group and at least 5 carbon atoms, as the alcohol component of the starting material, the content of the diol (b-2) having a branched alkylene group and at least 5 carbon atoms being at least 40 mol% based on the total amount of the alcohol component.

3. The multilayer coating film-forming method according to claim 1 or 2, wherein the two-component type clear coating material (Z) contains a hydroxyl group-containing acrylic resin (Z1) and a polyisocyanate compound (Z2) at 1.1 to 2.0 equivalents of isocyanate groups in the polyisocyanate compound (Z2) with respect to 1 equivalent of hydroxyl groups in the hydroxyl group-containing acrylic resin (Z1).

## Patentansprüche

1. Ein Verfahren zur Herstellung eines mehrschichtigen Beschichtungsfilms, welches, in folgender Reihenfolge, die Ausführung:
1) eines Schrittes zum Aufbringen eines ersten pigmentierten wässrigen Beschichtungsmaterials (X), das aus zwei Komponenten besteht, auf einen zu beschichtenden Artikel, um einen nicht ausgehärteten ersten pigmentierten Beschichtungsfilm zu bilden,
2) eines Schrittes zum Aufbringen eines zweiten pigmentierten wässrigen Beschichtungsmaterials (Y), das aus einer Komponente besteht, auf den in Schritt 1) erhaltenen nicht ausgehärteten ersten pigmentierten Beschichtungsfilm, um einen nicht ausgehärteten zweiten pigmentierten Beschichtungsfilm zu bilden,
3) eines Schrittes zum Aufbringen eines klaren Zwei-Komponenten-Beschichtungsmaterials (Z) auf den in Schritt 2) erhaltenen nicht ausgehärteten zweiten pigmentierten Beschichtungsfilm, um einen nicht ausgehärteten klaren Beschichtungsfilm zu bilden, und
4) eines Schrittes zum Erhitzen des nicht ausgehärteten ersten pigmentierten Beschichtungsfilms, des nicht ausgehärteten zweiten pigmentierten Beschichtungsfilms und des nicht ausgehärteten klaren Beschichtungsfilms, die in den Schritten 1) bis 3) gebildet worden sind, um die aufgebrachten Beschichtungsfilme gleichzeitig auszuhärten,
umfasst, wobei:
- das zweite pigmentierte wässrige Beschichtungsmaterial (Y), das aus einer Komponente besteht, ein Hydroxylgruppen enthaltendes Acrylharz (Y1), ein Hydroxylgruppen enthaltendes Polyesterharz (Y2) und eine blockierte Polyisocyanatverbindung und/oder ein Melaminharz (Y3) enthält,
- das Hydroxylgruppen enthaltende Acrylharz (Y1) ein wasserdispergierbares Hydroxylgruppen enthaltendes Acrylharz des Kern-Schale Typs (Y11) umfasst und
- das wasserdispergierbare Hydroxylgruppen enthaltende Acrylharz des Kern-Schale Typs (Y11) eine Kern-Schale-Struktur besitzt und der Anteil jedes der Monomere an der Gesamtmenge der den Kernteil und den Schalenteil der Kern-Schale-Struktur aufbauenden monomeren Komponenten, bezogen auf die Gesamtmenge der den Kernteil und den Schalenteil aufbauenden monomeren Komponenten:
· 40 bis 85 Masse-% eines polymerisierbaren ungesättigten Monomers (a-1) mit einer Homopolymer-Glasübergangstemperatur von nicht höher als -20 °C, entsprechend der Patentbeschreibung bestimmt,
· 0,1 bis 15 Masse-% eines polymerisierbaren ungesättigten Hydroxylgruppen enthaltenden Monomers (a-2),
· 0,1 bis 10 Masse-% eines polymerisierbaren ungesättigten Carboxylgruppen enthaltenden Monomers (a-3) und
· 0 bis 59,8 Masse-% eines polymerisierbaren ungesättigten Monomers (a-4), das keines der polymerisierbaren ungesättigten Monomere (a-1) bis (a-3) ist, beträgt, und
das Hydroxylgruppen enthaltende Polyesterharz (Y2) ein Polyesterharz (Y21) mit einer Hydroxylzahl von 100 bis 200 mg KOH/g und einer Säurezahl von 10 bis 30 mg KOH/g umfasst und
wobei das erste pigmentierte wässrige Beschichtungsmaterial (X), das aus zwei Komponenten besteht, ein Hydroxylgruppen enthaltendes Harz (X1) und eine Polyisocyanatverbindung (X2) mit 1,1 bis 2,0 Äquivalenten Isocyanatgruppen in der Polyisocyanatverbindung (X2) in Bezug auf 1 Äquivalent Hydroxylgruppen in dem Hydroxylgruppen enthaltenden Harz (X1) enthält.

2. Das Verfahren zur Herstellung eines mehrschichtigen Beschichtungsfilms nach Anspruch 1, wobei das Hydroxylgruppen enthaltende Polyesterharz (Y21) eine alicyclische mehrbasige Carbonsäure enthält, die Säureanhydride (b-1) als Säurekomponente des Ausgangsstoffs umfasst, wobei der Anteil der alicyclischen mehrbasigen Carbonsäure (die Säureanhydride (b-1) umfasst) mindestens 30 Mol-%, bezogen auf den Gesamtanteil der Säurekomponente, beträgt, und ein Diol (b-2) mit einer verzweigten Alkylengruppe und wenigstens 5 Kohlenstoffatomen als Alkoholkomponente des Ausgangsstoffs enthält, wobei der Anteil des Diols (b-2) mit einer verzweigten Alkylengruppe und wenigstens 5 Kohlenstoffatomen mindestens 40 Mol-%, bezogen auf den Gesamtanteil der Alkoholkomponente, beträgt.

3. Das Verfahren zur Herstellung eines mehrschichtigen Beschichtungsfilms nach Anspruch 1 oder 2, wobei das klare Zwei-Komponenten-Beschichtungsmaterial (Z) ein Hydroxylgruppen enthaltendes Acrylharz (Z1) und eine Polyisocyanatverbindung (Z2) mit 1,1 bis 2,0 Äquivalenten Isocyanatgruppen in der Polyisocyanatverbindung (Z2), bezogen auf 1 Äquivalent Hydroxylgruppen in dem Hydroxylgruppen enthaltenden Acrylharz (Z1), umfasst.

## Revendications

1. Procédé de formation de film de revêtement multicouche qui comporte la mise en oeuvre, dans l'ordre suivant :
(1) d'une étape consistant à appliquer un premier matériau de revêtement pigmenté aqueux de type à deux composants (X) sur un article à revêtir pour former un premier film de revêtement pigmenté non durci,
(2) d'une étape consistant à appliquer un second matériau de revêtement pigmenté aqueux de type à un seul composant (Y) sur le premier film de revêtement pigmenté non durci obtenu à l'étape (1) pour former un second film de revêtement pigmenté non durci,
(3) d'une étape consistant à appliquer un matériau de revêtement transparent de type à deux composants (Z) sur le second film de revêtement pigmenté non durci obtenu à l'étape (2) pour former un film de revêtement transparent non durci, et
(4) d'une étape consistant à chauffer le premier film de revêtement pigmenté non durci, le second film de revêtement pigmenté non durci et le film de revêtement transparent non durci formés aux étapes (1) à (3) pour faire durcir simultanément les films revêtus, dans lequel :
le second matériau de revêtement pigmenté aqueux de type à un seul composant (Y) contient une résine acrylique contenant des groupes hydroxyle (Y1), une résine de polyester contenant des groupes hydroxyle (Y2) et un composé polyisocyanate bloqué et/ou une résine de mélamine (Y3),
la résine acrylique contenant des groupes hydroxyle (Y1) comporte une résine acrylique contenant des groupes hydroxyle dispersible dans l'eau de type coeur-écorce (Y11),
la résine acrylique contenant des groupes hydroxyle dispersible dans l'eau de type coeur-écorce (Y11) a une structure de type coeur-écorce, et les rapports des teneurs de chacun des monomères dans la quantité totale des composants monomères composant la section coeur et la section écorce de la structure de type coeur-écorce, en fonction de la masse totale des composants monomères composant la section coeur et la section écorce, sont :
40 à 85 % en masse d'un monomère insaturé polymérisable (a-1) dont la température de transition vitreuse de l'homopolymère telle que déterminée selon la description n'est pas supérieure à -20°C,
0,1 à 15 % en masse d'un monomère insaturé polymérisable contenant des groupes hydroxyle (a-2),
0,1 à 10 % en masse d'un monomère insaturé polymérisable contenant des groupes carboxyle (a-3) et
0 à 59,8 % en masse d'un monomère insaturé polymérisable (a-4) autre que les monomères insaturés polymérisables (a-1) à (a-3), et
la résine de polyester contenant des groupes hydroxyle (Y2) comporte une résine de polyester (Y21) ayant un indice d'hydroxyle de 100 à 200 mg de KOH/g et un indice d'acide de 10 à 30 mg de KOH/g et
dans lequel le premier matériau de revêtement pigmenté aqueux de type à deux composants (X) contient une résine contenant des groupes hydroxyle (X1) et un composé polyisocyanate (X2) au niveau de 1,1 à 2,0 équivalents de groupes isocyanates dans le composé polyisocyanate (X2) par rapport à 1 équivalent de groupes hydroxyle dans la résine contenant des groupes hydroxyle (X1).

2. Procédé de formation de film de revêtement multicouche selon la revendication 1, dans lequel la résine de polyester contenant des groupes hydroxyle (Y21) comporte un polyacide carboxylique alicyclique qui comporte des anhydrides d'acide (b-1) en tant que composant acide du matériau de départ, la teneur du polyacide carboxylique alicyclique (qui comporte des anhydrides d'acide) (b-1) étant d'au moins 30 % en mole en fonction de la quantité totale du composant acide, et comporte un diol (b-2) ayant un groupe alkylène ramifié et au moins 5 atomes de carbone, en tant que composant alcoolique du matériau de départ, la teneur du diol (b-2) ayant un groupe alkylène ramifié et au moins 5 atomes de carbone étant d'au moins 40 % en mole en fonction de la quantité totale du composant alcoolique.

3. Procédé de formation de film de revêtement multicouche selon la revendication 1 ou 2, dans lequel le matériau de revêtement transparent de type à deux composants (Z) contient une résine acrylique contenant des groupes hydroxyle (Z1) et un composé polyisocyanate (Z2) au niveau de 1,1 à 2,0 équivalents de groupes isocyanate dans le composé polyisocyanate (Z2) par rapport à 1 équivalent de groupes hydroxyle dans la résine acrylique contenant des groupes hydroxyle (Z1).
